# EUROPEAN PATENT SPECIFICATION

(11) **EP 4 518 339 B1**
(45) Date of publication and mention of the grant of the patent: **08.07.2026**
(21) Application number: 23924990.7
(22) Date of filing: 13.11.2023
(51) Int. Cl.: H04N 23/60, H04N 23/62, H04N 23/63, H04N 23/667, H04N 23/80, H04N 23/95, H04N 5/76

(54) **PHOTOGRAPHING METHOD AND ELECTRONIC DEVICE**
FOTOGRAFIEVERFAHREN UND ELEKTRONISCHE VORRICHTUNG
PROCÉDÉ DE PHOTOGRAPHIE ET DISPOSITIF ÉLECTRONIQUE

(30) Priority: 27.02.2023 CN 202310212391
(43) Date of publication of application: 05.03.2025
(73) Proprietor: Honor Device Co., Ltd., Shenzhen, Guangdong 518040 (CN)
(72) Inventor: HOU, Weilong, Shenzhen, Guangdong 518040 (CN); ZHU, Shiyu, Shenzhen, Guangdong 518040 (CN); ZHANG, Jian, Shenzhen, Guangdong 518040 (CN); DONG, Zhen, Shenzhen, Guangdong 518040 (CN)
(74) Representative: Gill Jennings & Every LLP
(86) International application number: PCT/CN2023/131280
(87) International publication number: WO 2024/179039

(56) References cited:
- EP-A1- 4 273 684
- CN-A- 112 489 020
- CN-A- 114 079 724
- CN-A- 115 225 819
- CN-A- 115 525 188
- US-A1- 2015 341 549
- US-A1- 2022 277 547

## Description

### TECHNICAL FIELD

This application relates to the field of terminal technologies, and in particular, to a photographing method and an electronic device.

### BACKGROUND

In daily life, people usually take photos to record some highlight scenes (for example, a scene when jumping to a highest point or a scene when looking back and smiling). However, due to people's slow reaction and a shutter lag of a camera, a scene actually photographed by a user is generally later than the highlight scene seen by the user. To assist the user in accurately capturing the highlight scene, a common resolution is to buffer all preview images within a specific time range before and after a moment at which the user presses a shutter and then select several wonderful preview images from the buffered preview images for the user to select. However, in this resolution, all the preview images within the specific time range before and after the moment at which the user presses the shutter need to be buffered, which occupies a relatively large amount of internal memory space. US 20150341549A1 discloses automatic capture of multiple images and video with selection based on sensor and metadata analysis. CN 115525188A discloses video recording with frame analysis to identify target objects and extract processed image frames.

### SUMMARY

The scope of protection of the present invention is defined by the appended claims.

Embodiments of this application provide a photographing method and an electronic device, which not only can improve a matching degree between a finally outputted manual snapshot image and an expected image of a user, but also can save internal memory space.

According to a first aspect, an embodiment of this application provides a photographing method, including:
determining a score of each frame of preview image in a snapshot mode;
determining, from each group of preview images falling within an observation time window sequentially as time goes by, a candidate image of each group of preview images based on the score of each frame of preview image;
buffering, each time a candidate image of a group of preview images is determined, the currently determined candidate image in one of one or more preset first buffer regions, fixing the currently determined candidate image in a preset observation buffer region in a case that all the first buffer regions are occupied, and replacing a candidate image with earliest buffer time in all the first buffer regions with the currently determined candidate image after a candidate image of a next group of preview images is determined;
determining, in a case of detecting a photographing operation, a to-be-compared image of the photographing operation in response to the photographing operation from candidate images currently buffered in all the first buffer regions and the observation buffer region; and
determining, based on a score of the to-be-compared image and the score of each frame of preview image within preset duration after an occurrence moment of the photographing operation, a manual snapshot image corresponding to the photographing operation from the to-be-compared image and all preview images within the preset duration.

The candidate images currently buffered in all the first buffer regions and the observation buffer region refer to candidate images that have been buffered in all the first buffer regions and the observation buffer region at the occurrence moment of the photographing operation.

In an optional implementation, the electronic device may determine a candidate image with a highest score in the candidate images buffered in all the first buffer regions and the observation buffer region at the occurrence moment of the photographing operation as the to-be-compared image.

In the photographing method provided in embodiments of this application, the observation time window and the one or more preset first buffer regions are provided, only the candidate image of each group of preview images falling within the observation time window is buffered, and in a case that all the first buffer regions are occupied, the candidate image with earliest buffer time in the first buffer regions is replaced with the newly determined candidate image. In this way, there is no need to provide a large number of first buffer regions, and a storage capacity of each first buffer region only needs to accommodate one candidate image, thereby saving internal memory space. In addition, a final manual snapshot image is determined from the to-be-compared image buffered before the occurrence moment of the photographing operation and all the preview images within the preset duration after the occurrence moment of the photographing operation, so that a frame selection range of the finally outputted manual snapshot image can cover both a period of time in a historical direction of the occurrence moment of the photographing operation and a period of time in a future direction of the occurrence moment of the photographing operation, that is, the frame selection range of the manual snapshot image is expanded, thereby improving a matching degree between the manual snapshot image and an expected image of a user.

In this way, the user can be assisted in capturing a most wonderful photo before and after the photographing operation to improve the matching degree between the manual snapshot image and the expected image of the user, and the internal memory space can be saved.

In an optional implementation of the first aspect, the determining, from each group of preview images falling within an observation time window sequentially as time goes by, a candidate image of each group of preview images includes:

determining a preview image whose score is higher than a preset score threshold in each group of preview images as the candidate image of each group of preview images.

According to the photographing method provided in embodiments of this application, the preview image whose score is higher than the preset score threshold in each group of preview images is determined as the candidate image of each group of preview images, so that a score of the manual snapshot image finally outputted by the electronic device can be higher than the preset score threshold, thereby further improving a wonderful degree of the manual snapshot image.

In an optional implementation of the first aspect, the determining, based on a score of the to-be-compared image and the score of each frame of preview image within preset duration after an occurrence moment of the photographing operation, a manual snapshot image corresponding to the photographing operation from the to-be-compared image and all preview images within the preset duration includes:

determining, in a case that no another photographing operation is detected again within the preset duration, an image with a highest score in the to-be-compared image and all the preview images within the preset duration as the manual snapshot image corresponding to the photographing operation.

According to the photographing method provided in embodiments of this application, in a case that there is no another photographing operation within the preset duration in the future direction of the occurrence moment of the photographing operation, an image with the highest score in the to-be-compared image corresponding to the photographing operation and all the preview images within the preset duration is determined as the manual snapshot image corresponding to the photographing operation, so that the finally outputted manual snapshot image is the most wonderful image within a period of time before and after the occurrence moment of the photographing operation, thereby improving a wonderful degree of the finally outputted manual snapshot image.

In an optional implementation of the first aspect, the determining, based on a score of the to-be-compared image and the score of each frame of preview image within preset duration after an occurrence moment of the photographing operation, a manual snapshot image corresponding to the photographing operation from the to-be-compared image and all preview images within the preset duration further includes:
determining, in a case that another photographing operation is detected again within the preset duration, an image with a highest score in the to-be-compared image and all preview images within a first time period as the manual snapshot image corresponding to the photographing operation, where
a start moment of the first time period is the occurrence moment of the photographing operation, and an end moment of the first time period is a moment at which the another photographing operation is detected again.

In an optional implementation of the first aspect, the method further includes:
determining, in a case that the another photographing operation is detected again within the preset duration, a to-be-compared image corresponding to the another photographing operation based on the scores of all preview images within a second time period, where
a start moment of the second time period is the moment at which the another photographing operation is detected again, and a sum of duration of the second time period and duration of the first time period is second duration.

According to the photographing method provided in embodiments of this application, in a case that there is another photographing operation within the preset duration in the future direction of the occurrence moment of the photographing operation, the image with the highest score in the to-be-compared image corresponding to the photographing operation and all the preview images within the first time period is determined as the manual snapshot image corresponding to the photographing operation, and the to-be-compared image corresponding to the another photographing operation is determined based on the scores of all the preview images within the second time period. The start moment of the first time period is the occurrence moment of the photographing operation, the end moment of the first time period is the moment at which the another photographing operation is detected again, the start moment of the second time period is the moment at which the another photographing operation is detected again, and the sum of the duration of the second time period and the duration of the first time period is the second duration, so that frame selection ranges of two adjacent photographing operations can be prevented from being repeated, and completely repeated images will not be taken by a plurality of continuous manual snapshots, thereby improving the photographing experience of the user.

In an optional implementation of the first aspect, after the determining a to-be-compared image of the photographing operation from candidate images currently buffered in all the first buffer regions and the observation buffer region, and before the determining a manual snapshot image corresponding to the photographing operation from the to-be-compared image and all preview images within the preset duration, the method further includes:
generating a target thumbnail based on the to-be-compared image corresponding to the photographing operation, and displaying the target thumbnail in a thumbnail display region of a photographing preview interface.

According to the photographing method provided in embodiments of this application, influence on a manual snapshot speed of the user can be avoided, to improve the photographing experience of the user.

In an optional implementation of the first aspect, after the determining a manual snapshot image corresponding to the photographing operation from the to-be-compared image and all preview images within the preset duration, the method further includes:
generating an actual thumbnail based on the manual snapshot image corresponding to the photographing operation, and replacing the target thumbnail with the actual thumbnail.

According to the photographing method provided in embodiments of this application, the target thumbnail generated at the occurrence moment of the photographing operation is replaced with the actual thumbnail corresponding to the manual snapshot image, so that the thumbnail display region can correctly display the thumbnail corresponding to the final manual snapshot image. In this way, the manual snapshot speed of the user is not affected, and the thumbnail corresponding to the final manual snapshot image can be correctly displayed.

According to a second aspect, an embodiment of this application provides an electronic device, including: one or more processors; and one or more memories, where the one or more memories store one or more computer-executable programs, the one or more computer-executable programs include instructions, and when the instructions are executed by the one or more processors, the electronic device is caused to perform the steps of the photographing method according to any implementation of the first aspect.

According to a third aspect, an embodiment of this application provides a computer-readable storage medium, storing a computer-executable program, where when the computer-executable program is invoked by a computer, the computer is caused to perform the steps of the photographing method according to any implementation of the first aspect.

According to a fourth aspect, an embodiment of this application provides a computer-executable program product. When the computer-executable program product is run on an electronic device, the electronic device is caused to perform the steps of the photographing method according to any implementation of the first aspect.

According to a fifth aspect, an embodiment of this application provides a chip system, including a processor, where the processor is coupled to a memory, and the processor is configured to execute a computer-executable program stored in the memory, to implement the steps of the photographing method according to any implementation of the first aspect. The chip system may be a single chip or may be a chip module including a plurality of chips.

It may be understood that, for beneficial effects of the second aspect to the fifth aspect, reference may be made to related descriptions in the first aspect, and details are not described herein again.

### BRIEF DESCRIPTION OF DRAWINGS

FIG. 1 is a schematic diagram of a photographing process of a jump action according to an embodiment of this application;
FIG. 2 is a schematic structural diagram of an electronic device according to an embodiment of this application;
FIG. 3 is a schematic diagram of a software architecture of an electronic device according to an embodiment of this application;
FIG. 4A to FIG. 4C are schematic diagrams of principles of determining scores of preview images in different types of photographing scenes according to an embodiment of this application;
FIG. 5A to FIG. 5E are schematic diagrams of some GUIs that may be involved in an implementation process of a photographing method according to an embodiment of this application;
FIG. 6A(1) to FIG. 6G(2) are schematic principle diagrams of photographing logic of a camera application in a snapshot mode according to an embodiment of this application; and
FIG. 7 is a schematic flowchart of a photographing method according to an embodiment of this application.

### DESCRIPTION OF EMBODIMENTS

It should be noted that terms used in specific implementations of embodiments of this application are merely used to explain specific embodiments of this application, but are not intended to limit this application. In the description of embodiments of this application, unless otherwise specified, "/" means "or". For example, A/B may represent A or B. "And/or" used herein describes only an association relationship for describing associated objects and represents that three relationships may exist. For example, A and/or B may represent the following three cases: Only A exists, both A and B exist, and only B exists. In addition, in the description of embodiments of this application, unless otherwise specified, "a plurality of" means two or more than two, and "at least one" and "one or more" mean one, two, or more than two.

The terms "first" and "second" mentioned below are used merely for the purpose of description, and shall not be construed as indicating or implying relative importance or implying a quantity of indicated technical features. Therefore, a feature defined by "first" or "second" can explicitly or implicitly include one or more such features.

Reference to "one embodiment" or "some embodiments" described in this specification means that a specific characteristic, structure or feature described in combination with this embodiment is included in one or more embodiments of this application. Therefore, the statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other manners. The terms "include", "contain", "have" and their variations mean "including but not limited to", unless otherwise specially emphasized in other manners.

In daily life, people usually take photos to record some highlight scenes (for example, a scene when jumping to a highest point or a scene when looking back and smiling). Whether a highlight scene can be well captured mainly depends on the following several factors:
(1) Photographing moment: Selection of the photographing moment is related to whether an occurrence moment of the highlight scene can be captured;
(2) Photographing shutter: A speed at which the shutter is pressed is related to whether the highlight scene can be frozen and is also related to whether a photographed object can be clearly photographed; and
(3) Photographing focus: The photographing focus is related to whether the highlight scene can be focused.

For the factor of the photographing moment, the following situation generally occurs in a photographing process: When a user intends to photograph a highlight scene, the user generally presses the shutter immediately when the user sees the highlight scene, but there is generally a specific time interval between a moment at which the user sees the highlight scene and a moment at which the user actually presses the shutter, the time interval is reaction time of human and generally ranges from 100 ms to 200 ms. As a result, a scene actually photographed by the user is not the highlight scene that the user intends to photograph, but another scene later than the highlight scene. In addition, some cameras may have a shutter lag, and consequently, the scene finally photographed by the user is much later than the highlight scene that the user intends to photograph. Based on this, in a case that the user attempts to photograph the highlight scene a plurality of times but still cannot successfully capture the highlight scene, the user generally presses the shutter in advance before the highlight scene occurs based on pre-judgment of the user when the highlight scene is photographed again, to cause the moment at which the user presses the shutter to be exactly an occurrence moment of the highlight scene as much as possible, so as to capture the highlight scene. However, the pre-judgment of the user is not necessarily accurate. As a result, a scene that is actually photographed is generally earlier than the highlight scene that the user intends to photograph.

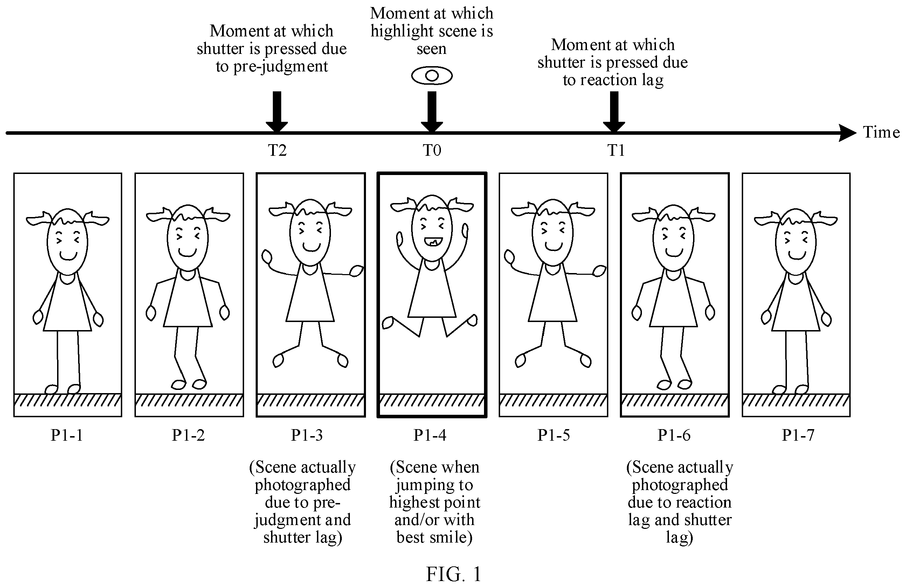

For example, FIG. 1 is a schematic diagram of a photographing process of a jump action according to an embodiment of this application. A plurality of frames of images (that is, an image P1-1 to an image P1-7) shown in FIG. 1 may correspond to a complete process of a jump action. When snapshot is performed on the jump action, as the jump action progresses (that is, as time goes by), the plurality of frames of images appear in a photographing preview interface of a camera sequentially. For the jump action, a highlight scene that people generally intend to photograph is a scene when a jumper jump to a highest point and/or a scene of the jumper with best smile (for example, a scene shown by the image P1-4 in FIG. 1). However, as described above, assuming that the user sees a highlight scene that the user intends to photograph at a moment T0 and presses a shutter immediately, due to a reaction lag of hands to eyes, a moment at which the user actually presses the shutter may be a moment T1, and in consideration of a shutter lag of the camera, a finally photographed scene may be a scene shown by the image P1-6. Assuming that the user presses the shutter at a moment T2 before the jump scene occurs based on pre-judgment when photographing the jump action next time, an actually photographed scene may be a scene shown by the image P1-3.

For the foregoing problem, a common solution is a zero shutter lag solution. In the zero shutter lag solution, a physical lag of the shutter is adjusted to zero, so that a scene finally photographed by the camera is likely to be a scene at the moment at which the user presses the shutter. That is, the zero shutter lag solution can alleviate or eliminate a photographing delay caused by the shutter lag, but a photographing delay caused by the reaction lag of human cannot be alleviated or eliminated. In other words, in the zero shutter lag solution, the user still needs to press the shutter in advance to capture the highlight scene seen by the user, which has a relatively high requirement on a photographing technique of the user. In addition, many scenes in reality are unpredictable, occur suddenly, and are fleeting, for example, a scene when looking back and smiling. In such scenes, the user cannot perform pre-judgment, that is, cannot predict a moment at which a highlight scene occurs, which has relatively high requirements on a reaction speed and attention of the user. As can be seen, whether the highlight scene can be captured in the zero shutter lag solution mainly depends on synchronization of hands and eyes of the user, which still cannot effectively resolve the photographing delay in technology.

To alleviate the photographing delay caused by the reaction lag of human, a commonly used photographing solution is to buffer all preview images within a specific time range before and after the moment at which the user presses the shutter and then select several wonderful preview images from the buffered preview images for the user to select. However, in this photographing solution, all the preview images within the specific time range before and after the moment at which the user presses the shutter need to be buffered, and in consideration of an internal memory limitation, the specific time range is generally a small range (for example, 0.2s in total before and after the moment at which the user presses the shutter). As a result, a selectable range of images actually photographed is small, reducing a matching degree between the images actually photographed and an expected image of the user.

In view of this, an embodiment of this application provides a photographing method. In this method, a score of each frame of preview image is determined in a snapshot mode; a corresponding candidate image is determined, based on the score of each frame of preview image, from each group of preview images falling within an observation time window sequentially as time goes by; the currently determined candidate image is buffered, each time a candidate image of a group of preview images is determined, in one of one or more preset first buffer regions, the currently determined candidate image is fixed in a preset observation buffer region in a case that all the first buffer regions are occupied, and a candidate image with earliest buffer time in all the first buffer regions is replaced with the currently determined candidate image after a candidate image of a next group of preview images is determined; in a case of detecting a photographing operation, a to-be-compared image is determined from candidate images currently buffered in all the first buffer regions and the observation buffer region; and a manual snapshot image corresponding to the photographing operation is determined, based on a score of the to-be-compared image and the score of each frame of preview image within preset duration after an occurrence moment of the photographing operation, from the to-be-compared image and all preview images within the preset duration. In this way, a matching degree between the manual snapshot image and the expected image of the user can be improved, and internal memory space can be saved.

The photographing method provided in embodiments of this application may be applied to an electronic device. That is, an entity performing the photographing method provided in embodiments of this application may be an electronic device. For example, the electronic device may include a camera, a mobile phone, a tablet computer, a wearable device, an in-vehicle device (such as a driving recorder), an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA).

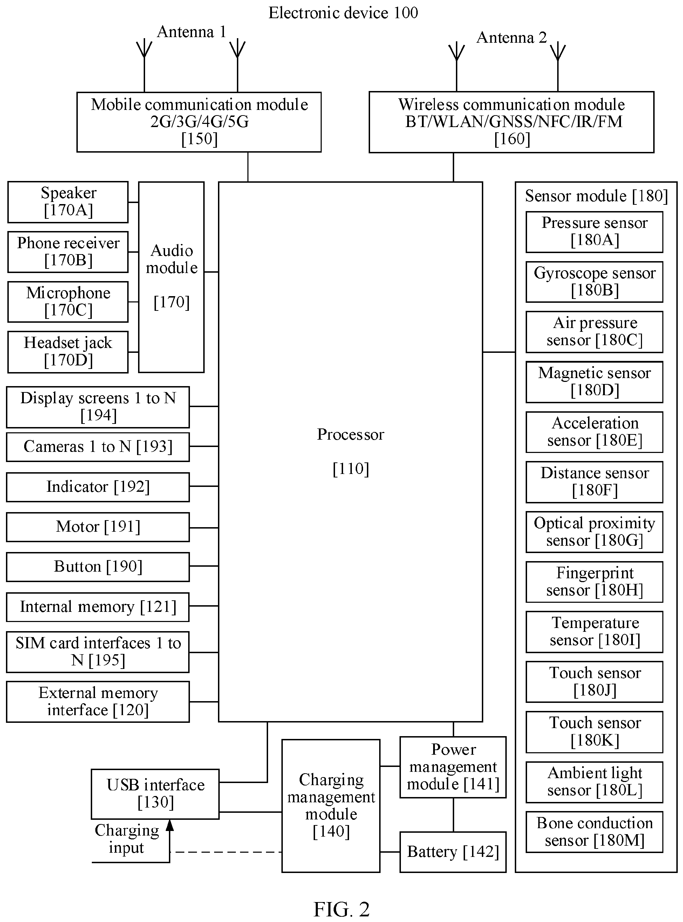

For example, FIG. 2 is a schematic structural diagram of an electronic device according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The controller may generate an operation control signal according to instruction operation code and a time-sequence signal, to complete control of fetching and executing instructions.

A memory may be further arranged in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory, to avoid repeated access, and reduce waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and/or a universal serial bus (universal serial bus, USB) interface.

The I2C interface is a bidirectional synchronization serial bus, and includes a serial data line (serial data line, SDA) and a serial clock line (derail clock line, SCL). In some embodiments, the processor 110 may include a plurality of sets of I2C buses. The processor 110 may be coupled to the touch sensor 180K, a charger, a flash, the camera 193, and the like by using different I2C bus interfaces respectively. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be configured for audio communication. In some embodiments, the processor 110 may include a plurality of sets of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured for audio communication, to sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement the function of answering a call through the Bluetooth headset. Both the I2S interface and the PCM interface may be configured for audio communication.

The UART interface is a universal serial data bus and is configured for asynchronous communication. The bus may be a bidirectional communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured through software. The GPIO interface may be configured as a control signal or a data signal. In some embodiments, the GPIO interface may be configured to connect the processor 110 to the camera 193, the display screen 194, the wireless communication module 160, the audio module 170, the sensor module 180, and the like. The GPIO interface may also be configured as an I2C interface, an I2S interface, a UART interface, an MIPI interface, and the like.

The USB interface 130 is an interface that complies with the USB standard specification, and may be specifically a Mini USB interface, a Micro USB interface, a USB Type C interface, and the like. The USB interface 130 may be configured to connect to the charger to charge the electronic device 100, or may be configured for data transmission between the electronic device 100 and the peripheral device, or may be connected to a headset to play audio through the headset. The interface may alternatively be configured to connect to another electronic device such as an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of the interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the display screen 194, the camera 193, the wireless communication module 160, and the like. The power management module 141 may be further configured to monitor parameters such as a battery capacity, a cycle count of a battery, and a battery health state (electric leakage and impedance). In some other embodiments, the power management module 141 may alternatively be arranged in the processor 110. In some other embodiments, the power management module 141 and the charging management module 140 may alternatively be arranged in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed to improve utilization of the antennas. For example, the antenna 1 may be multiplexed as a diversity antenna of a wireless local area network. In some other embodiments, the antennas may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be arranged in the processor 110. In some embodiments, at least some of the functional modules of the mobile communications module 150 may be arranged in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the phone receiver 170B, and the like), or displays an image or a video through the display screen 194. In some embodiments, the modem processor may be an independent component. In some other embodiments, the modem processor may be independent of the processor 110, and is arranged in a same device as the mobile communication module 150 or another functional module.

The wireless communication module 160 may provide a solution to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology applied to the electronic device 100. The wireless communication module 160 may be one or more devices into which at least one communication processing module is integrated. The wireless communication module 160 receives an electromagnetic wave through the antenna 2, performs frequency modulation and filtering on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite-based augmentation systems (SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured for graphics rendering. The processor 110 may include one or more GPUs that execute a program instruction to generate or change display information.

The display screen 194 is configured to display an image and a video. The display screen 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include 1 or N display screens 194, and N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to naked eyes. The ISP may further perform algorithm optimization on noise, luminance, and complexion of the image. The ISP may also optimize parameters such as exposure and a color temperature of a photographed scene. In some embodiments, the ISP may be arranged in the camera 193.

The camera 193 is configured to capture a static image or a video. An optical image of an object is generated through the lens and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include 1 or N cameras 193, and N is a positive integer greater than 1.

The digital signal processor is configured to process a digital signal, and in addition to a digital image signal, the digital signal processor may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, MPEG 4, or the like.

The NPU is a neural-network (neural-network, NN) computing processor, quickly processes input information by referring to a structure of a biological neural network, for example, a transmission mode between neurons in a human brain, and may further continuously perform self-learning. The NPU may be used to implement an application such as intelligent cognition of the electronic device 100, for example, image recognition, facial recognition, voice recognition, and text understanding.

The external memory interface 120 may be configured to connect to an external storage card such as a micro SD card, to expand a storage capability of the electronic device 100. The external storage card communicates with the processor 110 through the external memory interface 120, to implement a data storage function, for example, store files such as music and a video into the external storage card.

The internal memory 121 may be configured to store computer executable program code, and the executable program code includes instructions. The internal memory 121 may include a program storage area and a data storage area. The program storage area may store an operating system, an application program required by at least one function (for example, a sound playback function or an image display function), and the like. The data storage area may store data (for example, audio data and an address book) and the like created when the electronic device 100 is used. In addition, the internal memory 121 may include a high-speed random access memory, and may further include a non-volatile memory, for example, at least one magnetic disk storage device, a flash memory device, or a universal flash storage (universal flash storage, UFS). The processor 110 runs the instruction stored in the internal memory 121, and/or the instructions stored in the memory arranged in the processor, to perform various function applications and data processing of the electronic device 100.

The electronic device 100 may implement an audio function such as music playing or recording by using the audio module 170, the speaker 170A, the phone receiver 170B, the microphone 170C, the headset jack 170D, the application process, and the like.

The audio module 170 is configured to convert digital audio information into an analog audio signal output, and is further configured to convert an analog audio input into a digital audio signal. The audio module 170 may further be configured to encode and decode audio signals. In some embodiments, the audio module 170 may be arranged in the processor 110, or some functional modules in the audio module 170 are arranged in the processor 110.

The speaker 170A, also referred to as a "horn", is configured to convert an audio electrical signal into a sound signal. Music may be listened to or a hands-free call may be answered by using the speaker 170A in the electronic device 100.

The phone receiver 170B, also referred to as a "receiver", is configured to convert an audio electrical signal into a sound signal. When the electronic device 100 is configured to answer a call or receive voice information, the phone receiver 170B may be put close to a human ear to receive a voice.

The microphone 170C, also referred to as a "voice tube" or "mike", is configured to convert a sound signal into an electrical signal. When making a call or sending voice information, a user may speak with the mouth approaching the microphone 170C, to input a sound signal into the microphone 170C. At least one microphone 170C may be arranged in the electronic device 100. In some other embodiments, two microphones 170C may be arranged in the electronic device 100, to collect a sound signal and implement a noise reduction function. In some other embodiments, three, four, or more microphones 170C may be alternatively arranged in the electronic device 100, to collect a sound signal, implement noise reduction, recognize a sound source, implement a directional recording function, and the like.

The headset interface 170D is configured to connect to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be arranged on the display screen 194. There are many types of pressure sensors 180A, such as a resistive pressure sensor, an inductive pressure sensor, and a capacitive pressure sensor. The capacitive pressure sensor may include at least two parallel plates made of a conductive material. When a force is applied to the pressure sensor 180A, capacitance between electrodes changes. The electronic device 100 determines pressure strength based on a change in the capacitance. When a touch operation is performed on the display screen 194, the electronic device 100 detects strength of the touch operation according to the pressure sensor 180A. The electronic device 100 may also calculate a touch position based on a detection signal of the pressure sensor 180A. In some embodiments, touch operations that are applied to a same touch position but have different touch operation strength may correspond to different operation instructions. For example, when a touch operation whose touch operation strength is less than a first pressure threshold is performed on an icon of an SMS message application, an instruction for viewing an SMS message is executed. When a touch operation whose touch operation strength is greater than or equal to the first pressure threshold is performed on the icon of the SMS message application, an instruction for creating a new SMS message is executed.

The gyroscope sensor 180B may be configured to determine a motion posture of the electronic device 100. In some embodiments, an angular velocity of the electronic device 100 around three axes (that is, x, y, and z axes) may be determined through the gyroscope sensor 180B. The gyroscope sensor 180B may be configured for image stabilization during photographing. For example, when the shutter is pressed, the gyroscope sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyroscope sensor 180B may also be configured for navigation and a motion sensing game scene.

The air pressure sensor 180C is configured to measure air pressure. In some embodiments, the electronic device 100 calculates an altitude by using an air pressure value measured by the air pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover according to the magnetic sensor 180D. Further, based on a detected opening or closing state of the leather case or a detected opening or closing state of the flip cover, a feature such as automatic unlocking of the flip cover is set.

The acceleration sensor 180E may detect acceleration values of the electronic device 100 in all directions (generally in three axes). When the electronic device 100 is stationary, a magnitude and a direction of gravity may be detected. The acceleration sensor 180E may be further configured to recognize a posture of the electronic device, and is applied to an application such as switching between landscape orientation and portrait orientation or a pedometer.

The distance sensor 180F is configured to measure a distance. The electronic device 100 may measure a distance by infrared light or laser. In some embodiments, in a photographing scene, the electronic device 100 may use the distance sensor 180F to measure a distance to implement fast focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, so as to implement automatic screen-off to save power. The optical proximity sensor 180G may be further configured to automatically unlock and lock a screen in a leather case mode and a pocket mode.

The ambient light sensor 180L is configured to perceive ambient light brightness. The electronic device 100 may adaptively adjust a luminance of the display screen 194 according to the perceived ambient light brightness. The ambient light sensor 180L may also be configured to automatically adjust white balance during photographing. The ambient light sensor 180L may also cooperate with the optical proximity sensor 180G to detect whether the electronic device 100 is in a pocket to prevent an accidental touch.

The fingerprint sensor 180H is configured to collect a fingerprint. The electronic device 100 may implement fingerprint unlocking, application lock accessing, fingerprint photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142 to prevent abnormal shutdown caused by a low temperature.

The touch sensor 180K is also referred to as a "touch device". The touch sensor 180K may be arranged on the display screen 194. The touch sensor 180K and the display screen 194 form a "touchscreen". The touch sensor 180K is configured to detect a touch operation on or near the touch sensor. The touch sensor may transmit the detected touch operation to the application processor to determine a touch event type. A visual output related to the touch operation may be provided through the display 194. In some other embodiments, the touch sensor 180K may alternatively be arranged on a surface of the electronic device 100 at a position different from that of the display screen 194.

The bone conduction sensor 180M may collect a vibration signal. In some embodiments, the bone conduction sensor 180M may obtain a vibration signal of a vibration bone of a human vocal-cord part. The bone conduction sensor 180M may also come into contact with a human pulse to receive a blood pressure beating signal. In some embodiments, the bone conduction sensor 180M may alternatively be arranged in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch-type button. The electronic device 100 may receive a button input, and generate a button signal input related to user setting and function control of the electronic device 100.

The motor 191 may generate a vibration prompt. The motor 191 may be configured for an incoming call vibration prompt and a touch vibration feedback. For example, touch operations performed on different applications (for example, photo taking and audio playing) may correspond to different vibration feedback effects. For touch operations performed in different regions of the display screen 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light that may be configured to indicate a charging state or a power change, or may be configured to indicate a message, a missed call, a notification, and the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support 1 or N SIM card interfaces, and N is a positive integer greater than 1. The SIM card interface 195 may support a Nano SIM card, a Micro SIM card, a SIM card, and the like. A plurality of cards may be inserted into the same SIM card interface 195 together. The plurality of cards may be of a same type or different types. The SIM card interface 195 may further be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

It may be understood that the structure shown in FIG. 2 does not constitute a specific limitation on the electronic device 100. In some other embodiments of this application, the electronic device 100 may include more or fewer components than those shown in the figure, or some components may be combined, or some components may be split, or components are arranged in different manners. The components in the figure may be implemented by hardware, software, or a combination of software and hardware.

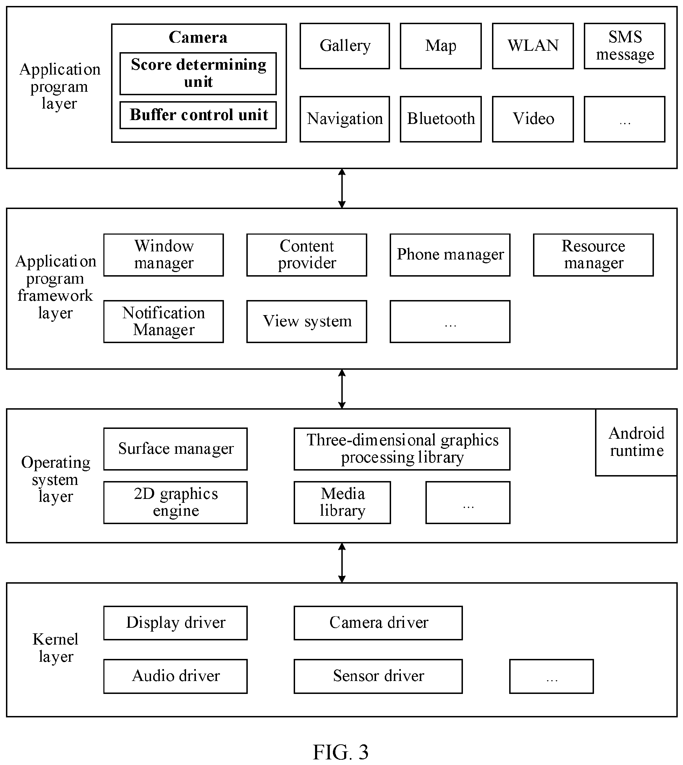

A software system of the electronic device 100 may use a layered architecture, an event-driven architecture, a microkernel architecture, a micro service architecture, or a cloud architecture. In this embodiment of this application, the software structure of the electronic device 100 is illustrated by using an Android system with a layered architecture as an example. FIG. 3 is a block diagram of a software structure of an electronic device according to an embodiment of this application.

In the layered architecture, software is divided into several layers, and each layer has a clear role and task. The layers communicate with each other through a software interface. In some embodiments, the Android system is divided into four layers, namely, an application program layer, an application program framework layer, an Android runtime (Android runtime) and a system library, and a kernel layer from top to bottom.

The application program layer may include a series of application program packages.

As shown in FIG. 3, the application program packages may include application programs such as camera, gallery, map, navigation, WLAN, Bluetooth, video, and SMS message.

The camera application may include a score determining unit and a buffer control unit.

The score determining unit may be configured to determine a score of each frame of preview image in a photographing preview interface of the camera application based on a preset score determining policy. It should be noted that a specific process of determining the score of each preview image based on the score determining policy is described in detail in subsequent embodiments, and details are not described herein.

The buffer control unit is configured to determine, in a snapshot mode of the camera application and based on the score of each frame of preview image, whether to buffer the preview image or whether to output a buffered preview image as a snapshot image.

The application program framework layer provides an application programming interface (application programming interface, API) and a programming framework for the application programs at the application program layer. The application program framework layer includes some predefined functions.

As shown in FIG. 3, the application program framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot of the screen, and the like.

The content provider is configured to store and obtain data and make the data accessible to an application program. The data may include video, an image, audio, calls that are made and answered, a browsing history and a bookmark, a phonebook, and the like.

The view system includes visual controls such as a control for displaying text and a control for displaying a picture. The view system may be configured to construct an application program. A display interface may include one or more views. For example, a display interface including an SMS message notification icon may include a view for displaying text and a view for displaying a picture.

The phone manager is configured to provide a communication function of the electronic device, for example, call state management (including getting through, hang-up, and the like).

The resource manager provides various resources such as a localized character string, an icon, a picture, a layout file, and a video file for an application program.

The notification manager enables an application program to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears in a top status bar of the system in a form of a graph or scroll bar text, for example, a notification of an application program running in the background, or may be a notification that appears on the screen in a form of a dialog window. For example, text information is prompted in the status bar, an alert sound is produced, the electronic device vibrates, or the indicator light flickers.

The Android Runtime includes a kernel library and a virtual machine. The Android runtime is responsible for scheduling and managing the Android system.

The kernel library includes two parts: One part is a performance function that the Java language needs to invoke, and the other part is a kernel library of Android.

The application program layer and the application program framework layer are run in the virtual machine. The virtual machine executes Java files of the application program layer and the application program framework layer as binary files. The virtual machine is configured to execute functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem, and provide fusion of 2D and 3D layers for a plurality of application programs.

The media library supports playback and recording in a plurality of common audio and video formats, a static image file, and the like. The media library may support a plurality of audio and video encoding formats, such as: MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display drive, a camera drive, an audio drive, and a sensor drive.

The following illustrates working processes of software and hardware of the electronic device 100 with reference to a photographing scene.

When the touch sensor 180K (as shown in FIG. 2) of the electronic device 100 receives a touch operation, a corresponding hardware interrupt is sent to the kernel layer. The kernel layer processes the touch operation into an original input event (including information such as coordinates of a touch and a time stamp of the touch operation). The original input event is stored at the kernel layer. The application program framework layer obtains the original input event from the kernel layer, and identifies a control corresponding to the input event. Using an example in which the touch operation is a touch/click operation, and a control corresponding to the click operation is a control of a camera application icon. The camera application invokes an interface of the application program framework layer to start the camera application, then starts a camera driver by invoking the kernel layer, and captures a static image or a video by using the camera 193 (as shown in FIG. 2).

The photographing method provided in embodiments of this application may be applied to a snapshot mode of the camera application. The snapshot mode may be one of photographing modes of the camera application, and in addition to the snapshot mode, the photographing modes of the camera application may further include a common mode and an artificial intelligence (artificial intelligence, AI) mode. In addition to the photographing modes, the camera application may further include a video recording mode and other modes, and working modes of the camera application are not specifically limited in embodiments of this application.

In some embodiments, the snapshot mode may include a manual snapshot function.

The manual snapshot function may be used, when a photographing operation of a user is detected, to assist the user in selecting a most wonderful preview images meeting a preset requirement from preview images appearing between a first moment and a second moment as a manual snapshot image of the user.

The photographing operation may be an action that the user presses a photographing button. For example, the photographing button may include a physical button, for example, a shutter button of a camera or a combination of a volume button and a power button of a mobile phone; and the photographing button may alternatively include a virtual button, for example, a photographing control in a photographing preview interface of a mobile phone.

A moment at which the user presses the photographing button may be a photographing occurrence moment.

The first moment may be earlier than the occurrence moment of the photographing operation, and the second moment may be later than the occurrence moment of the photographing operation.

During specific application, first duration between the first moment and the occurrence moment of the photographing operation may be set according to experience, and second duration between the second moment and the occurrence moment of the photographing operation may also be set according to experience. For example, considering that duration of a non-static action (for example, a jump action) is generally about 1 second (s), and factors such as a reaction lag of the user and/or a shutter lag are further taken into consideration, a sum of the first duration and the second duration is set to 1.5s. Further, photographing by the user is generally purposeful, and the user generally does not wait several seconds before pressing the shutter after seeing a scene that the user intends to photograph, so that the second duration may be less than the first duration. For example, the first duration may be 1s, and the second duration may be 0.5s. That is, the manual snapshot function may assist the user in selecting the most wonderful preview image meeting the preset requirement from preview images appearing between 1s in a historical direction of the occurrence moment of the photographing operation and 0.5s in a future direction of the occurrence moment of the photographing operation as the manual snapshot image of the user.

A preview image meeting the preset requirement may be a preview image whose score is higher than a preset score threshold. The most wonderful preview image meeting the preset requirement may be a preview image with a highest score in preview images meeting the preset requirement.

The score of the preview image may be used for indicating a wonderful degree of the preview image. A higher score of the preview image may indicate a higher wonderful degree of the preview image, and that the preview image is closer to the definition of a highlight image; and a lower score of the preview image may indicate a lower wonderful degree of the preview image, and that the preview image is farther from the definition of a highlight image.

The preset score threshold may be set according to an actual situation, which is not specifically limited herein. For example, if the score of the preview image is calculated based on a 100-full score system, the preset score threshold may be, for example, 90; and if the score of the preview image is calculated based on a 10-full score system, the preset score threshold may be, for example, 9.

In embodiments of this application, the score of the preview image may be determined by the electronic device based on a preset score determining policy. For example, the preset score determining policy may include:
determining a weight value of the preview image in a semantics dimension and a weight value of the preview image in a shutter lag dimension; and
comprehensively determining the score of the preview image based on the weight value of the preview image in the semantics dimension and the weight value of the preview image in the shutter lag dimension.

The semantics dimension may be used to indicate a dimension related to content of the preview image.

For example, the semantics dimension may include a plurality of different sub-dimensions. The plurality of different sub-dimensions may include, for example, an expression dimension, an action dimension, a definition dimension, a composition dimension, and a main body category dimension.

In the expression dimension, a clearer expression and a better expression (for example, expressions such as smile or laugh) of a photographed main body (for example, human) in the preview image indicates a greater weight value of the preview image in the expression dimension; and a more blurred expression and a poorer expression indicates a smaller weight value.

In the action dimension, a higher similarity between an action of the photographed main body in the preview image and a preset action indicates a greater weight value of the preview image in the action dimension; and a smaller similarity indicates a smaller weight value. For example, the preset action may include highlight actions in different types of sports, for example, a smash action in badminton, a shoot action in basketball, an action when jumping to a highest point, and an action when throwing out a frisbee. During specific application, for example, the similarity between the action of the photographed main body and the preset action may be determined in a manner of performing bone point detection on the photographed main body in the preview image.

In the definition dimension, a higher definition of the preview image indicates a greater weight value of the preview image in the definition dimension; and a lower definition indicates a smaller weight value.

In the composition dimension, a better composition of the preview image indicates a greater weight value of the preview image in the composition dimension; and a poorer composition indicates a smaller weight value.

In the main body category dimension, a weight value of a preview image including a preset photographed main body in the main body category dimension may be greater than a weight value of a preview image not including the preset photographed main body in the main body category dimension. For example, the preset photographed main body may include human and/or a pet (for example, a cat or a dog).

The shutter lag dimension may be used to indicate a dimension related to a moment at which the preview image appears in the photographing preview interface.

In the shutter lag dimension, the closer the moment at which the preview image appears in the photographing preview interface is to a preset reaction moment of the photographing operation, the greater the weight value of the preview image in the shutter lag dimension. The preset reaction moment of the photographing operation may be earlier than the occurrence moment of the photographing operation by third duration, and the third duration generally may be reaction duration of human, for example, 100 ms to 200 ms.

In an optional implementation, the comprehensively determining the score of the preview image based on the weight value of the preview image in the semantics dimension and the weight value of the preview image in the shutter lag dimension may be: determining a sum of the weight value of the preview image in the semantics dimension and the weight value of the preview image in the shutter lag dimension as the score of the preview image.

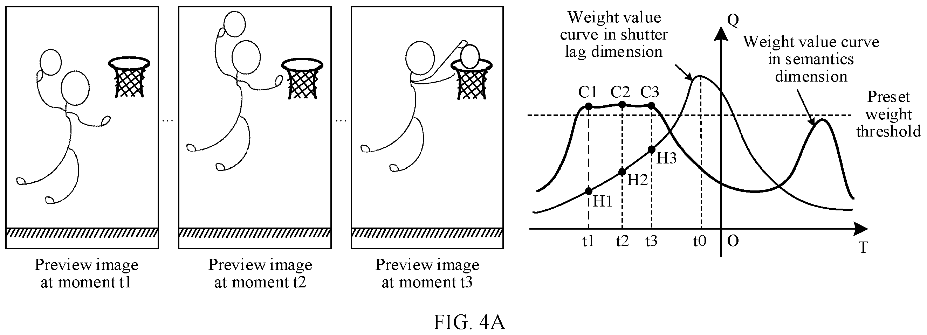

The following describes principles of determining scores of preview images in corresponding photographing scenes with reference to different types of photographing scenes. For example, FIG. 4A to FIG. 4C are schematic diagrams of principles of determining scores of preview images in different types of photographing scenes according to an embodiment of this application. For ease of understanding, the photographing scenes are divided into a continuous action scene, an instantaneous action scene, a scene of an undefined category, and other photographing scenes in embodiments of this application.

The continuous action scene may be used to indicate a photographing scene in which a preview image meeting the preset requirement in the semantics dimension includes a plurality of frames of continuous preview images in time domain.

For example, the preview image meeting the preset requirement in the semantics dimension may be that: a weight value of the preview image in the semantics dimension is greater than a preset weight threshold. Optionally, the weight value of the preview image in the semantics dimension may be a sum of weight values of the preview image in various sub-dimensions of the semantics dimension. It should be noted that a manner of determining the preset weight threshold may be, for example, similar to a manner of determining the preset score threshold, and the manner of determining the preset weight threshold is not described herein.

For example, a shoot scene shown on a left side in FIG. 4A is a typical continuous action scene. In the shoot scene, a series of actions from a moment (that is, a moment t1) at which a sporter jumps with a ball to a moment (that is, a moment t3) at which the ball is shot generally may be considered as highlight actions. Therefore, assuming that three continuous shoot actions in time domain shown in FIG. 4A occur between the moment t1 and a moment t2, occurrence moments of the three continuous shoot actions in time domain are respectively the moment t1, the moment t2, and the moment t3. In this way, for the shoot scene, the preview image meeting the preset requirement in the semantics dimension determined based on the preset score determining policy may include a preview image at the moment t1, a preview image at the moment t2, and a preview image at the moment t3.

For example, assuming that weight values of the preview image at the moment t1, the preview image at the moment t2, and the preview image at the moment t3 in the semantics dimension respectively correspond to a point C1, a point C2, and a point C3 in a time-weight (TOQ) coordinate system shown on a right side in FIG. 4A, and weight values of the preview image at the moment t1, the preview image at the moment t2, and the preview image at the moment t3 in the shutter lag dimension respectively correspond to a point H1, a point H2, and a point H3 in the TOQ coordinate system. In this way, a score of the preview image at the moment t1 may be a sum of a weight value corresponding to the point C1 and a weight value corresponding to the point H1, a score of the preview image at the moment t2 may be a sum of a weight value corresponding to the point C2 and a weight value corresponding to the point H2, and a score of the preview image at the moment t3 may be a sum of a weight value corresponding to the point C3 and a weight value corresponding to the point H3.

A coordinate origin O in the TOQ coordinate system is the occurrence moment of the photographing operation, and duration of an interval between a moment t0 and the coordinate origin O generally may be reaction time of human, for example, 100 ms to 200 ms. It may be understood that, a weight value of a preview image at the moment t0 in the shutter lag dimension is generally the greatest; and the farther a moment at which a preview image appears in the photographing preview interface is from the moment t0, the smaller a weight value of the preview image in the shutter lag dimension.

The instantaneous action scene may be used to indicate a photographing scene in which a preview image meeting the preset requirement in the semantics dimension includes one or more frames of discrete (that is, non-continuous) preview images in time domain.

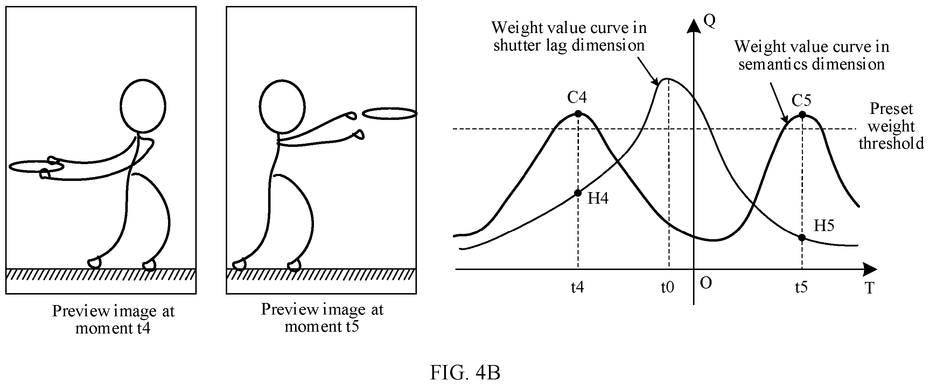

For example, a frisbee throwing scene shown on a left side of FIG. 4B is a typical instantaneous action scene. In the frisbee throwing scene, only an action at a charge moment (that is, a moment t4) and an action at a moment at which a frisbee is thrown (that is, a moment t5) are considered as highlight actions. Therefore, for the frisbee throwing scene, the preview image meeting the preset requirement in the semantics dimension determined based on the score determining policy includes a preview image at the moment t4 and a preview image at the moment t5, and the moment t4 and the moment t5 are generally non-continuous.

For example, assuming that weight values of the preview image at the moment t4 and the preview image at the moment t5 in the semantics dimension respectively correspond to a point C4 and a point C5 in a TOQ coordinate system shown on a right side in FIG. 4B, and weight values of the preview image at the moment t4 and the preview image at the moment t5 in the shutter lag dimension respectively correspond to a point H4 and a point H5 in the TOQ coordinate system. In this way, a score of the preview image at the moment t4 may be a sum of a weight value corresponding to the point C4 and a weight value corresponding to the point H4, and a score of the preview image at the moment t5 may be a sum of a weight value corresponding to the point C5 and a weight value corresponding to the point H5.

The scene of the undefined category may be used to indicate another photographing scene other than the continuous action scene and the instantaneous action scene.

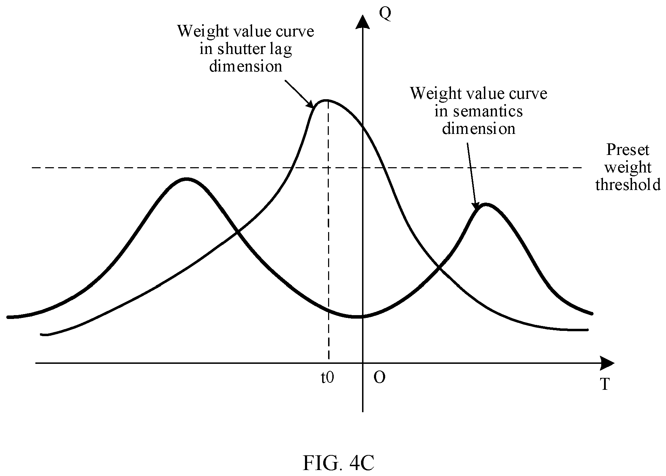

As shown in FIG. 4C, a score determining policy of a preview image in the scene of the undefined category may be similar to the score determining policy of a preview image in the continuous action scene or the instantaneous action scene, and for example, may be a sum of a weight value of the preview image in the semantics dimension and a weight value of the preview image in the shutter lag dimension.

It should be noted that since a process of determining the weight value of the preview image in each dimension is not a protection focus of this application, details are not described in embodiments of this application.

In some other embodiments, the snapshot mode may further include an automatic snapshot function.

Optionally, the automatic snapshot function may be used to automatically output, when a preview image meeting a preset requirement is identified, the preview image meeting the preset requirement, to help the user automatically photograph a highlight image that may not be noticed by the user.

Optionally, for a same or similar photographing scene, the automatic snapshot function may be used to output only one preview image meeting a preset requirement, to reduce repetition of photos obtained through automatic snapshot. In this way, internal memory space of the electronic device can be saved, and the user does not need to screen a plurality of similar photos subsequently, thereby improving the photographing experience of the user.

In an optional implementation, the automatic snapshot function may be an optional function of the camera application, that is, the electronic device may enable or disable the automatic snapshot function based on a use requirement of the user. It may be understood that, in a case that the automatic snapshot function is disabled, after entering the snapshot mode, the electronic device does not perform a photographing process corresponding to the automatic snapshot function, but only performs a photographing process corresponding to the manual snapshot function; and in a case that the automatic snapshot function is enabled, after entering the snapshot mode, the electronic device performs both the photographing process corresponding to the automatic snapshot function and the photographing process corresponding to the manual snapshot function.

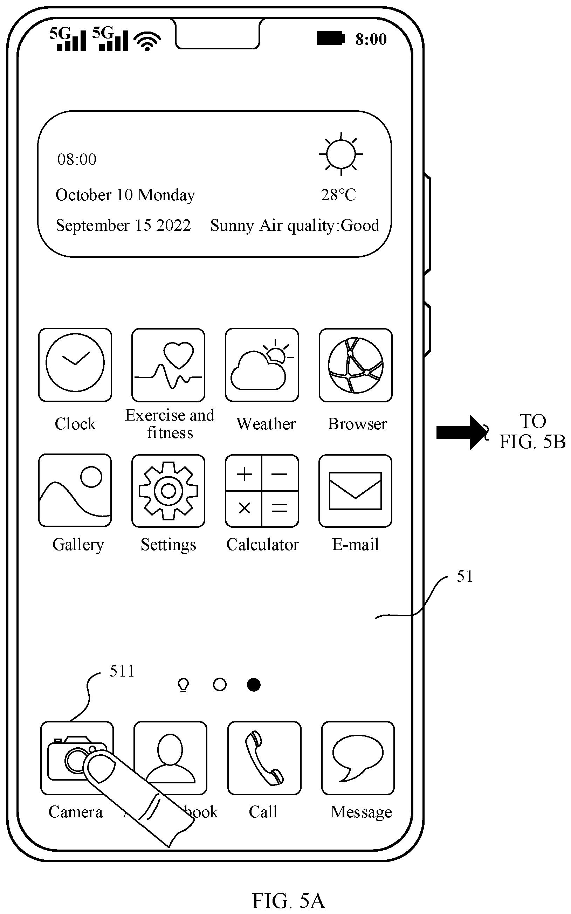

Some graphical user interfaces (graphical user interface, GUI) that may be involved in an implementation process of the photographing method provided in embodiments of this application are described below by using an example in which the electronic device is a mobile phone. FIG. 5A to FIG. 5E are schematic diagrams of some GUIs that may be involved in an implementation process of a photographing method according to an embodiment of this application.

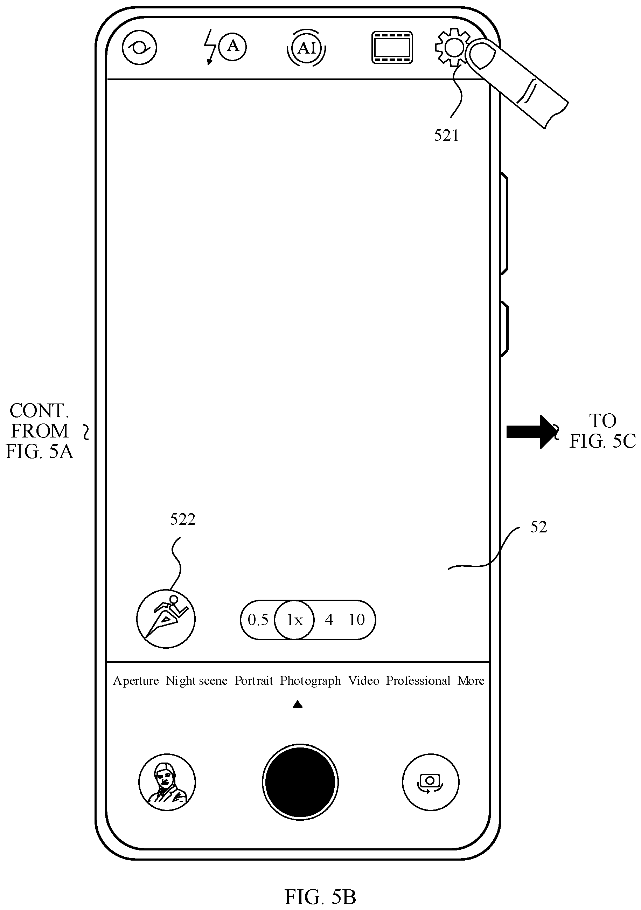

For example, when the user needs to perform photographing, the user may enter a tap operation on a camera application icon 511 in a mobile phone desktop 51 shown in FIG. 5A. When detecting the tap operation on the camera application icon 511, the mobile phone may display a photographing preview interface 52 shown in FIG. 5B in response to the tap operation on the camera application icon 511.

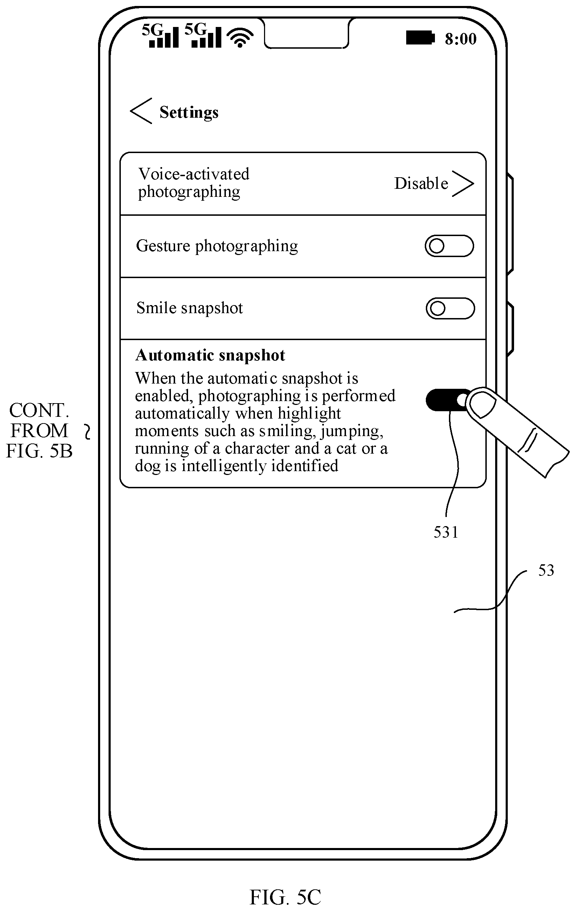

For example, as shown in FIG. 5B, in some embodiments, the photographing preview interface 52 may include a camera setting control 521. When the user needs to enable or disable the automatic snapshot function, the user may enter a tap operation on the camera setting control 521 in the photographing preview interface 52. When detecting the tap operation on the camera setting control 521, the mobile phone may display a camera setting interface 53 shown in FIG. 5C in response to the tap operation on the camera setting control 521.

For example, as shown in FIG. 5C, the camera setting interface 53 may include a first switch control 531 configured to control enabling or disabling of the automatic snapshot function, and the user may enable or disable the automatic snapshot function by operating the first switch control 531. The first switch control 531 may include, for example, an enabled state and a disabled state. When the first switch control 531 is in the disabled state, it indicates that the automatic snapshot function is in the disabled state. In this case, if the user needs to enable the automatic snapshot function, the user may enter a tap operation on the first switch control 531 in the camera setting interface 53; and the mobile phone may set the first switch control 531 to the enabled state in response to the tap operation on the first switch control 531. When the first switch control 531 is in the enabled state, it indicates that the automatic snapshot function is in the enabled state. In this case, if the user needs to disable the automatic snapshot function, the user may enter a tap operation on the first switch control 531 in the camera setting interface 53; and the mobile phone may set the first switch control 531 to the disabled state in response to the tap operation on the first switch control 531.

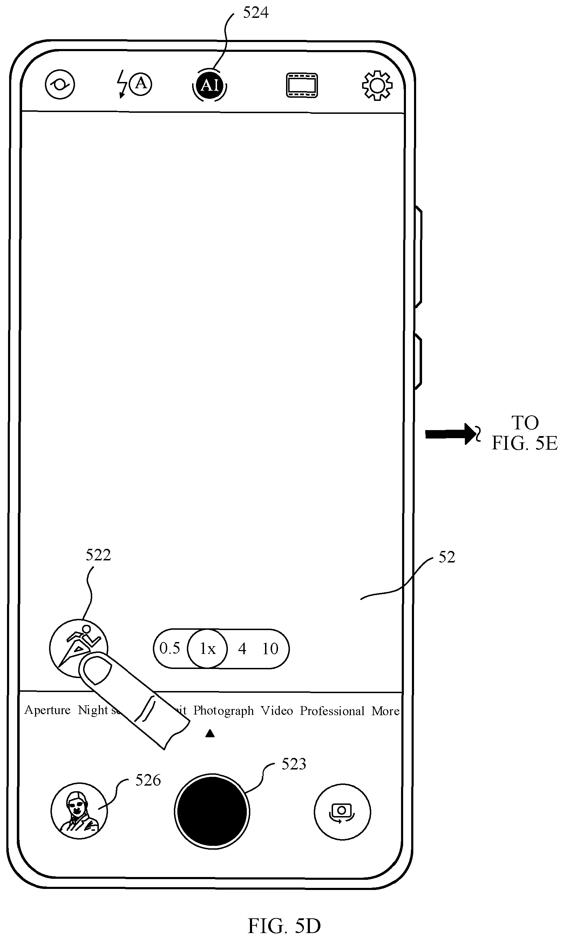

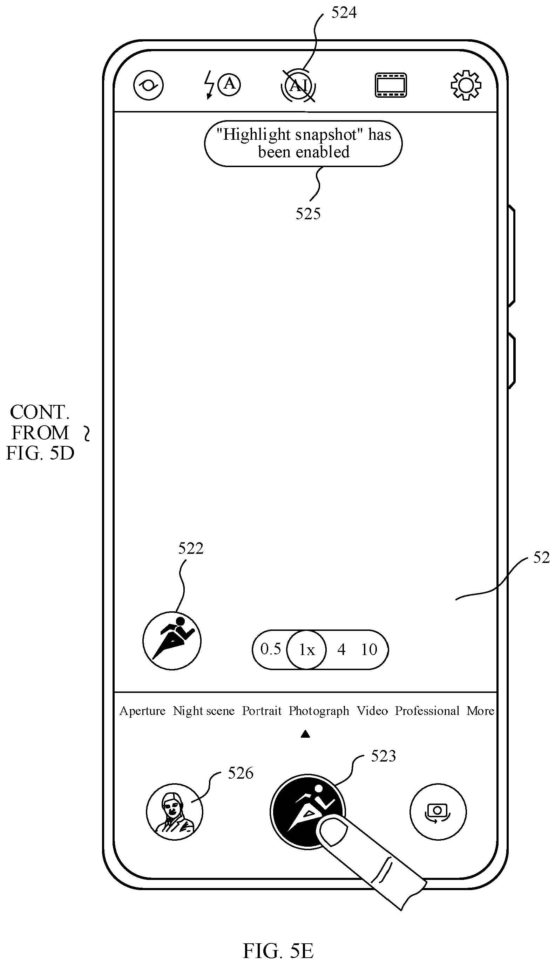

For example, as shown in FIG. 5D or FIG. 5E, in some other embodiments, the photographing preview interface 52 may further include a snapshot switch control 522 for controlling the snapshot mode to be enabled or disabled, and the user may enable or disable the snapshot mode by operating the snapshot switch control 522. The snapshot switch control 522 may include, for example, an enabled state and a disabled state. When the snapshot switch control 522 is in the disabled state shown in FIG. 5D, it indicates that the camera application is not in the snapshot mode currently. In this case, if the user needs to enable the snapshot mode, the user may enter a tap operation on the snapshot switch control 522 in the photographing preview interface 52 shown in FIG. 5D; and the mobile phone may set the snapshot switch control 522 to the enabled state shown in FIG. 5E in response to the tap operation performed on the snapshot switch control 522 and entered by the user in the photographing preview interface 52 shown in FIG. 5D. When the snapshot switch control 522 is in the enabled state, it indicates that the camera application is in the snapshot mode currently. In this case, the mobile phone may perform the photographing method provided in embodiments of this application; if the user needs to disable the snapshot mode, the user may enter a tap operation on the snapshot switch control 522 in the photographing preview interface 52 shown in FIG. 5E; and the mobile phone may set the snapshot switch control 522 to the disabled state shown in FIG. 5D in response to the tap operation performed on the snapshot switch control 522 and entered by the user in the photographing preview interface 52 shown in FIG. 5E, to disable the snapshot mode.

It should be noted that when both the snapshot mode and the automatic snapshot function are in the enabled state, the camera application may implement the automatic snapshot function and the manual snapshot function simultaneously; and in a case that the snapshot mode is in the enabled state and the automatic snapshot function is in the disabled state, the camera application can implement only the manual snapshot function.

Optionally, as shown in FIG. 5D or FIG. 5E, the photographing preview interface 52 may further include a photographing button 523. The photographing button 523 may be used as a control button for manual photographing (for example, manual snapshot), and is configured for the user to enter a photographing operation. For example, the user may enter the photographing operation by taping the photographing button 523. Certainly, during specific application, the user may alternatively enter the photographing operation in other manners. For example, the user may enter the photographing operation by pressing the volume button and the power button simultaneously. In another example, the user may enter the photographing operation by operating a wireless control device connected to the mobile phone. An enter manner of the photographing operation is not specifically limited in embodiments of this application. When detecting the photographing operation, the mobile phone may perform photographing in response to the photographing operation.

In some embodiments, to intuitively prompt the photographing mode of the camera application, the photographing button 523 may include a plurality of different display states, and the different display states of the photographing button 523 may correspond to different photographing modes of the camera application. For example, the photographing button 523 may include at least a first display state shown in FIG. 5D and a second display state shown in FIG. 5E. The second display state may correspond to the snapshot mode of the camera application. That is, when the snapshot mode of the camera application is in the enabled state, the mobile phone may set the photographing button 523 to the second display state to prompt the user that the camera application is in the snapshot mode currently. In this way, when seeing or taping the photographing button 523, the user can intuitively learn that the camera application is in the snapshot mode currently; and when the snapshot mode of the camera application is in the disabled state, the mobile phone may set the photographing button 523 to the first display state or another display state to prompt the user that the camera application is not in the snapshot mode currently or prompt the user that the camera application is in another photographing mode other than the snapshot mode currently.

In some other embodiments, to intuitively prompt the enabled/disabled state of the automatic snapshot function of the snapshot mode, as shown in FIG. 5E, when the automatic snapshot function of the snapshot mode is in the enabled state, the photographing preview interface 52 may further include description 525 for indicating that the automatic snapshot function is in the enabled state. The description 525 may be, for example, description in a text form. The description in the text form may be, for example, that "highlight" snapshot has been enabled. Alternatively, the description 525 may be description in another form (for example, an identifier form). A representation form of the description 525 is not specifically limited in embodiments of this application.

In still some other embodiments, when another photographing mode (for example, the AI mode) of the camera application affects the snapshot mode (for example, affects photographing quality of the snapshot mode), the mobile phone may automatically disable the another photographing mode while enabling the snapshot mode, to prevent the another photographing mode of the camera application from affecting the photographing quality of the snapshot mode.

For example, as shown in FIG. 5D or FIG. 5E, the photographing preview interface 52 may further include an AI switch control 524 for controlling the AI mode to be enabled or disabled. The AI switch control 524 may include, for example, an enabled state and a disabled state. When the AI switch control 524 is in the enabled state shown in FIG. 5D, it indicates that the camera is in the AI mode currently. When the snapshot mode of the camera application is enabled, the mobile phone may automatically set the AI switch control 524 to the disabled state shown in FIG. 5E. Certainly, during specific application, the user may alternatively manually enable or disable the AI mode of the camera application by operating the AI switch control 524.

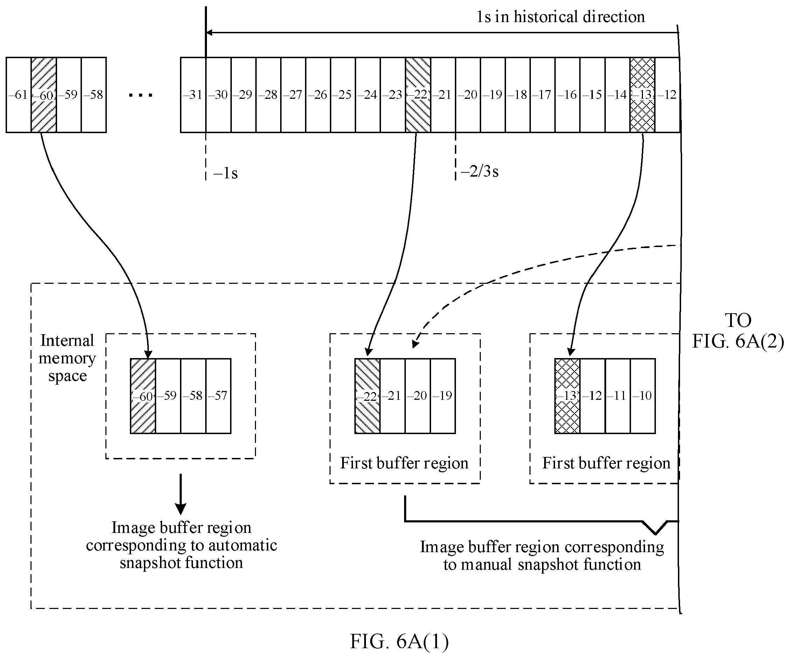

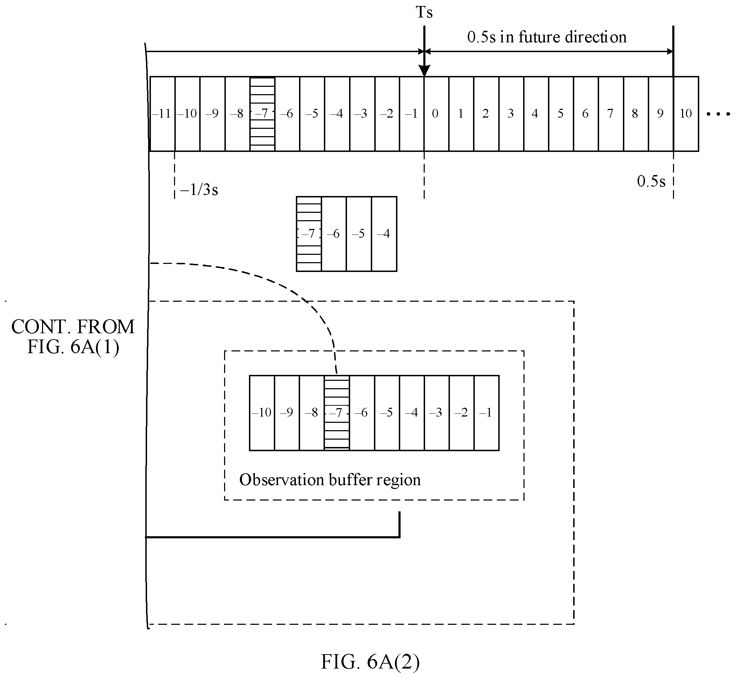

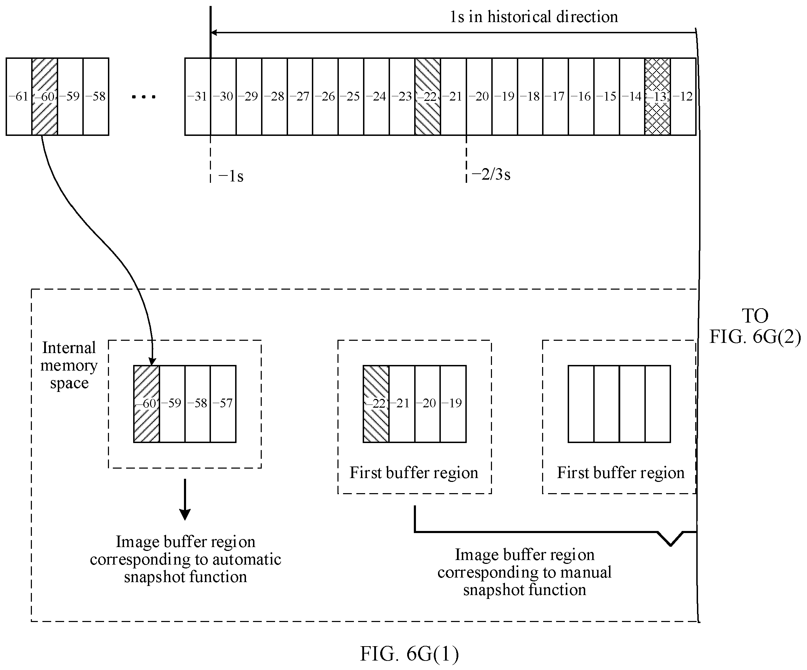

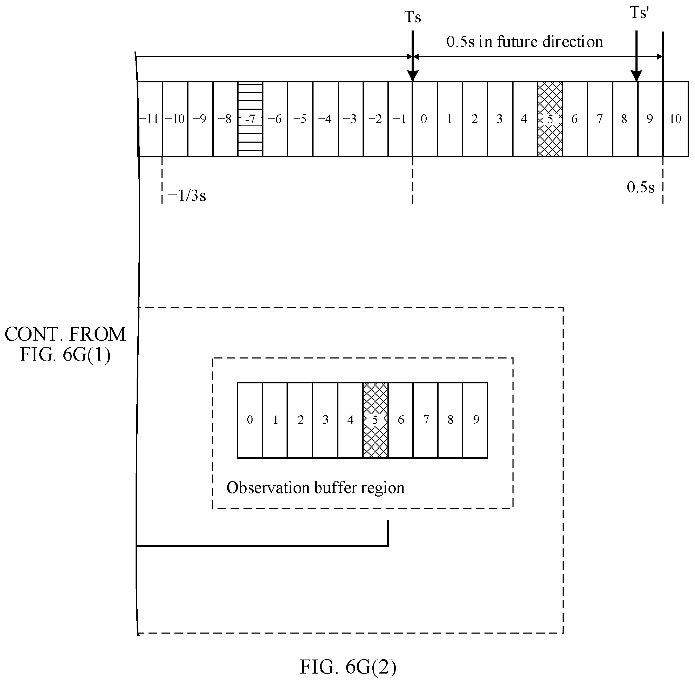

The following describes photographing logic of the camera application in the snapshot mode. FIG. 6A(1) to FIG. 6G(2) are schematic principle diagrams of photographing logic of a camera application in a snapshot mode according to an embodiment of this application.

Each rectangular box containing a number in a first row from left to right in FIG. 6A(1) and FIG. 6A(2) may be respectively regarded as one frame of preview image that sequentially appears frame by frame in the photographing preview interface 52 shown in FIG. 5E as time goes by. The number in each rectangular box may be used to indicate a frame number of the preview image corresponding to the rectangular box, and the frame number of the preview image may be used to indicate a sequence of the preview image appearing in the photographing preview interface 52. For example, a frame number of a preview image that appears earlier in the photographing preview interface 52 may be less than a frame number of a preview image that appears later in the photographing preview interface 52. A preview image with a negative frame number may be used for indicating a preview image that appears in the photographing preview interface 52 before the occurrence moment Ts of the photographing operation, and a preview image with a positive frame number may be used for indicating a preview image that appears in the photographing preview interface 52 after the occurrence moment Ts of the photographing operation.

The manual snapshot function needs to select the most wonderful preview image meeting the preset requirement from preview images appearing between first duration before the occurrence moment Ts of the photographing operation (for example, 1s in the historical direction of the occurrence moment of the photographing operation) and second duration after the occurrence moment Ts of the photographing operation (that is, 0.5s in the future direction of the occurrence moment of the photographing operation) as the manual snapshot image of the user. However, in an actual application, the mobile phone cannot predict the occurrence moment of the photographing operation of the user. Therefore, theoretically, all preview images appearing in the photographing preview interface 52 need to be buffered, so that when the photographing operation of the user is detected, the most wonderful preview image meeting the preset requirement can be selected from the buffered preview images. However, buffering all the preview images appearing in the photographing preview interface 52 occupies a large amount of internal memory space.

Based on this, to save the internal memory space, in embodiments of this application, when the manual snapshot function is implemented, not all the preview images appearing in the photographing preview interface 52 are buffered, but a part of preview images meeting the preset requirement are selectively buffered. In this way, a selectable range of actually photographed images can be expanded, and the internal memory space can be saved.

Specifically, an observation time window may be predefined as a basic observation unit for preview image buffering. The observation time window may be a time window of fixed duration starting from any moment.

In addition, an image buffer region corresponding to the manual snapshot function may be further predefined in the internal memory space of the mobile phone. The image buffer region corresponding to the manual snapshot function may include an observation buffer region and at least one first buffer region.

The observation buffer region may be used to buffer each group of preview images falling within the observation time window sequentially as time goes by. For example, the observation buffer region may perform image buffering in an iterative manner (that is, a one-in-one-out buffering manner). That is, as time goes by, a preview image first buffered in the observation buffer region is first released.

The first buffer region may be used to buffer images meeting the preset requirement in each group of preview images falling within the observation time window. It may be understood that, because a quantity of the first buffer regions is limited, and preview images falling within the observation time window are always updated, the first buffer regions may perform image buffering in a replacement manner. That is, in a case that all the first buffer regions are occupied, a preview image in one of the first buffer regions may be replaced with a newly determined preview image meeting the preset requirement, and the replaced preview image may be a preview image with earliest buffer time in all the first buffer regions.

For example, duration of the observation time window and a quantity of image buffer regions corresponding to the manual snapshot function may be set based on the following principle: not only a requirement of the manual snapshot function on a frame selection range can be met, but also the internal memory space occupied by the buffered images can be minimized. The requirement of the manual snapshot function on the frame selection range may be, for example, that preview images buffered in the image buffer regions corresponding to the manual snapshot function need to cover at least all preview images within first duration in the historical direction of the occurrence moment of the photographing operation. It should be noted that "cover" herein may be understood as "consider", and cannot be understood as "buffer".

For example, assuming that the first duration is 1s, and the duration of the observation time window determined based on the foregoing principle is 1/3s, the quantity of the image buffer regions corresponding to the manual snapshot function may be 1/(1/3)=3, which may include one observation buffer region and two first buffer regions. In this way, the preview images buffered in the image buffer regions corresponding to the manual snapshot function can cover all preview images within 1s before the occurrence moment of the photographing operation, and the internal memory space occupied by the image buffer regions is also minimum.

For example, a storage capacity of the first buffer region may be determined based on a size of each frame of preview image, an image buffering manner of the camera application, an image output format of the camera application, and the like. Assuming that the size of each frame of preview image is a1 megabytes (mega byte, MB), the image buffering manner of the camera application is an n-frame raw (raw) image synthesis manner, and the image output format of the camera application is a binning format, the storage capacity of the first buffer region may be n*a1*10/8 megabytes; assuming that the image output format of the camera application is a 12-bit (bit) intra-scene dual converter gain (intra-sense dual converter gain, IDCG) format, the storage capacity of the first buffer region may be n*a1*12/8 megabytes; and assuming that the image output format of the camera application is a 14-bit IDCG format, the storage capacity of the first buffer region may be n*a1*14/8 megabytes.

For example, a storage capacity of the observation buffer region may be determined based on the size of each frame of preview image, the duration of the observation time window, a frame rate of the camera, the image buffering manner of the camera application, the image output format of the camera application, and the like. For example, with reference to the foregoing example, assuming that the duration of the observation time window is Δt, the frame rate of the camera application is f, the image buffering manner of the camera application is the n-frame raw image synthesis manner, and the image output format of the camera application is the binning format, the storage capacity of the observation buffer region may be (Δt/f)*a1*10/8 megabytes; assuming that the image output format of the camera application is the 12-bit IDCG format, the storage capacity of the observation buffer region may be (Δt/f)*a1*12/8 megabytes; and assuming that the image output format of the camera application is the 14-bit IDCG format, the storage capacity of the observation buffer region may be (Δt/f)*a1*14/8 megabytes.

Based on this, when the manual snapshot function is implemented, the mobile phone may determine, based on a preset score determining policy, a score of each frame of preview image appearing in the photographing preview interface sequentially as time goes by; and determines, from each group of preview images falling within the observation time window sequentially as time goes by, a candidate image of each group of preview images based on the score of each frame of preview image. It should be noted that each group of preview images does not have a same preview image as another group of preview images.

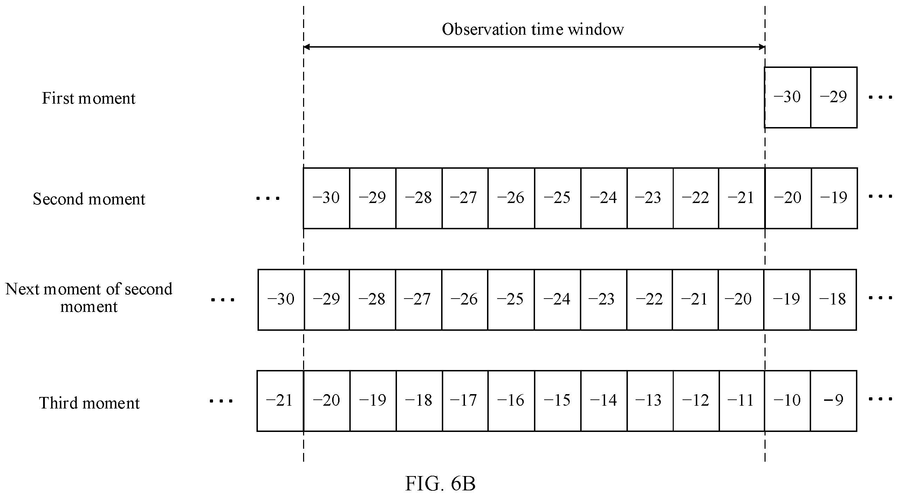

For example, as shown in FIG. 6B, assuming that at a first moment, a preview image numbered -30 starts to fall within the observation time window, at a second moment after Δt seconds, preview images numbered -30 to -21 all fall within the observation time window. In this case, the preview images numbered -30 to -21 may be considered as a group of preview images; at a next moment of the second moment, a preview image numbered -20 falls within the observation time window, and the preview image numbered -30 is squeezed out of the observation time window. In this case, preview images numbered -29 to -20 fall within the observation time window. However, because the preview images numbered -30 to -21 and the preview images numbered -29 to -20 have same preview images, the preview images numbered -29 to -20 cannot be considered as a group of preview images; and only at a third moment after Δt seconds from the second moment, when the preview images numbered -30 to -21 are all squeezed out of the observation time window and preview images numbered -20 to -11 fall within the observation time window, the preview images numbered -20 to -11 may be considered as another group of preview images.

In some embodiments, the candidate image of each group of preview images may include a preview image with a highest score in the group of preview images. In some other embodiments, when the image buffering manner of the camera application is the n-frame raw image synthesis manner, the candidate image of each group of preview images may include n consecutive frames of preview images including the preview image with the highest score in the group of preview images, that is, in addition to including the preview image with the highest score in the group of preview images, the candidate image of each group of preview images may further include other (n-1) frames of preview images adjacent to the preview image with the highest score.

For example, the other (n-1) frames of preview images adjacent to the preview image with the highest score may be n-1 consecutive frames of preview images appearing after the preview image with the highest score and adjacent to the preview image with the highest score. For example, assuming that a preview image with a highest score in the group of preview images numbered -30 to -21 is a preview image numbered -22, the candidate image of this group of preview images may include the preview image numbered -22, the preview image numbered -21, the preview image numbered -20, and a preview image numbered -19.

Each time after determining a candidate image of a group of preview images, the mobile phone may buffer the currently determined candidate image in one of the one or more first buffer regions. Optionally, in a case that all of the first buffer regions are occupied, the mobile phone may first fix and buffer the currently determined candidate image in the observation buffer region, and replace, after the mobile phone determines a candidate image of a next group of preview images, a candidate image with earliest buffer time in all the first buffer regions with the candidate image fixed and buffered in the observation buffer region, and fix and buffer the candidate image of the next group of preview images in the observation buffer region.

For example, with reference to FIG. 6A(1) and FIG. 6A(2), assuming that the mobile phone buffers candidate images (that is, the preview images numbered -22 to -19) of the group of preview images numbered -30 to -21 in one first buffer region of the internal memory space at the second moment, and buffers candidate images (that is, preview images numbered -13 to -10) of the group of preview images numbered - 20 to -11 in another first buffer region of the internal memory space at the third moment. After the mobile phone determines candidate images (that is, preview images numbered -7 to -4) of a group of preview images numbered -10 to -1 at a fourth moment (that is, a moment after Δt seconds from the third moment), the mobile phone may first fix and buffer the candidate images (that is, the preview images numbered -7 to -4) of this group of preview images numbered -10 to -1 in the observation buffer region; and after the mobile phone determines candidate images of a group of preview images numbered 0 to 9 at a fifth moment (that is, a moment after Δt seconds from the fourth moment), the mobile phone may replace the candidate images (that is, the preview images numbered -22 to -19) buffered in one first buffer region at the second moment with the candidate images (that is, the preview images numbered -7 to -4) determined at the fourth moment, and fix and buffer the candidate images of the group of preview images numbered 0 to 9 determined at the fifth moment in the observation buffer region. In this way, the image buffer region corresponding to the manual snapshot function can always buffer preview images meeting the preset requirement within the first duration in the historical direction of the occurrence moment of the photographing operation.

Based on this, when the user enters a photographing operation at a moment, the mobile phone may select a candidate image from candidate images currently (that is, at the occurrence moment of the photographing operation) buffered in all the first buffer regions and the observation buffer region as a to-be-compared image. For example, the mobile phone may determine a candidate image with a highest score in the candidate images currently buffered in all the first buffer regions and the observation buffer region as the to-be-compared image. For example, with reference to the foregoing example, assuming that the user enters the photographing operation at the fifth moment, a score of the preview image numbered -22 is 95, a score of the preview image numbered -13 is 92, and a score of the preview image numbered -7 is 80, the mobile phone may determine the preview images numbered -13 to -10 as the to-be-compared image.

Then, as time goes by, the user may compare a score of each frame of preview image within second duration from the occurrence moment of the photographing operation with a score of the to-be-compared image, determine an image with a highest score in the to-be-compared image and all the preview images within the second duration as a snapshot image, and output the snapshot image. It should be noted that because the to-be-compared image may include n frames of preview images, the score of the to-be-compared image may be a score of a preview image with a highest score in the n frames of preview images included in the to-be-compared image.

For example, if the to-be-compared image includes the preview images numbered -13 to -10, when the user enters the photographing operation at the moment Ts, the mobile phone may compare the score of the preview image numbered -13 with scores of the preview images numbered 0 to 9 respectively. If the scores of the preview images numbered 0 to 9 are all less than the score of the preview image numbered -13, the mobile phone may perform image synthesis on the preview images numbered -13 to -10 as the manual snapshot image.

For the automatic snapshot function, because the automatic snapshot function is not related to the photographing operation of the user, in a case that the automatic snapshot function is in the enabled state, each time the mobile phone determines a score of a frame of preview image, the score of the preview image may be compared with a preset score threshold, and a preview image whose score is higher than the preset score threshold may be buffered in an image buffer region corresponding to the automatic snapshot function. During specific application, if the mobile phone performs image buffering in the n-frame raw image synthesis manner, the mobile phone may buffer other (n-1) frames of preview images adjacent to the preview image whose score is higher than the preset score threshold together.

Image buffering may be performed in a replacement manner in the image buffer region corresponding to the automatic snapshot function, that is, in a case that the image buffer region corresponding to the automatic snapshot function is occupied, when a preview image with a higher score exists in the same photographing scene, the mobile phone may replace a preview image currently buffered in the image buffer region corresponding to the automatic snapshot function with the preview image with the higher score.

In addition, when detecting that the photographing scene changes, the mobile phone may output the preview image currently buffered in the image buffer region corresponding to the automatic snapshot function at a moment at which the photographing scene changes. In this way, for each different photographing scene, the mobile phone may automatically capture a most wonderful image (that is, a preview image with a highest score) in the photographing scene.

For example, that the photographing scene changes may include, but is not limited to, the following several cases:
(1) A photographed main body changes, for example, a character gets in or out a photographing scene or a pet gets in or out a photographing scene.
(2) An action amplitude of a photographed main body changes greatly, for example, a character in a photographing scene changes from a static state to a running state or a jumping state.
(3) The background changes greatly, for example, the background changes from indoor to outdoor.

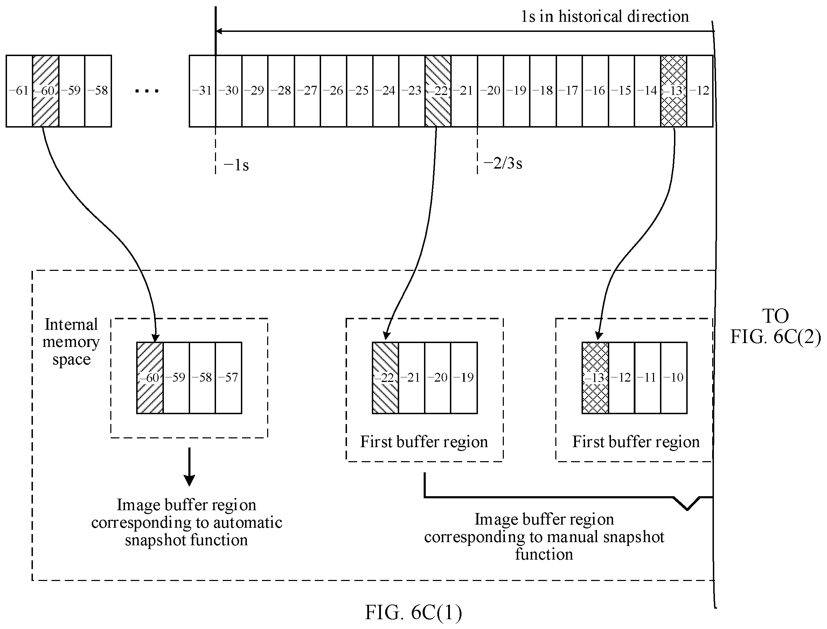

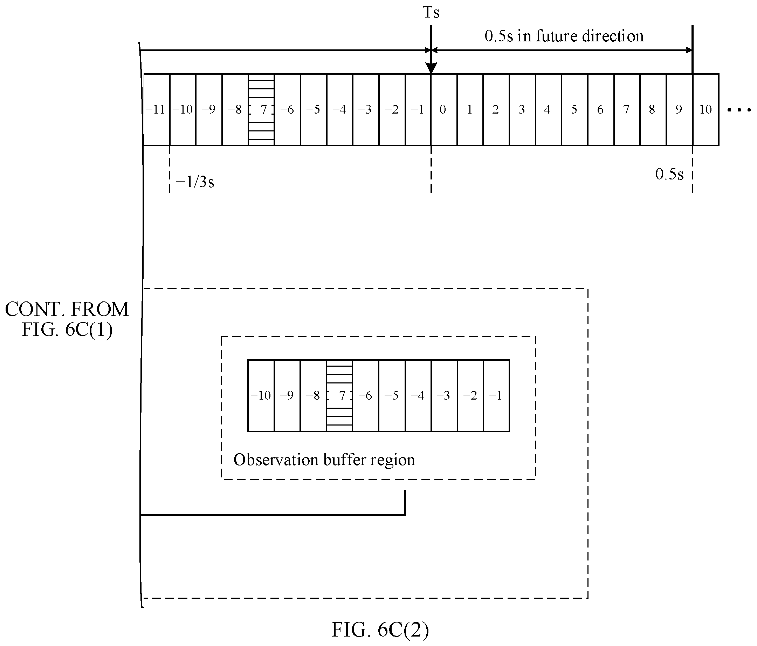

In an actual application, the mobile phone cannot predict an occurrence moment of a photographing operation and cannot predict an occurrence interval of the photographing operation. Therefore, the following separately describes manual snapshot logic of the camera application in different situations with reference to FIG. 6C(1) to FIG. 6G(2).

As shown in FIG. 6C(1) and FIG. 6C(2), when no photographing operation is detected, manual snapshot is an uncertain event. Therefore, as time goes by, the mobile phone needs to continuously update the candidate images in the first buffer regions and the observation buffer region. In addition, when the automatic snapshot function is in the enabled state, the mobile phone further needs to continuously update the preview image in the image buffer region corresponding to the automatic snapshot function.

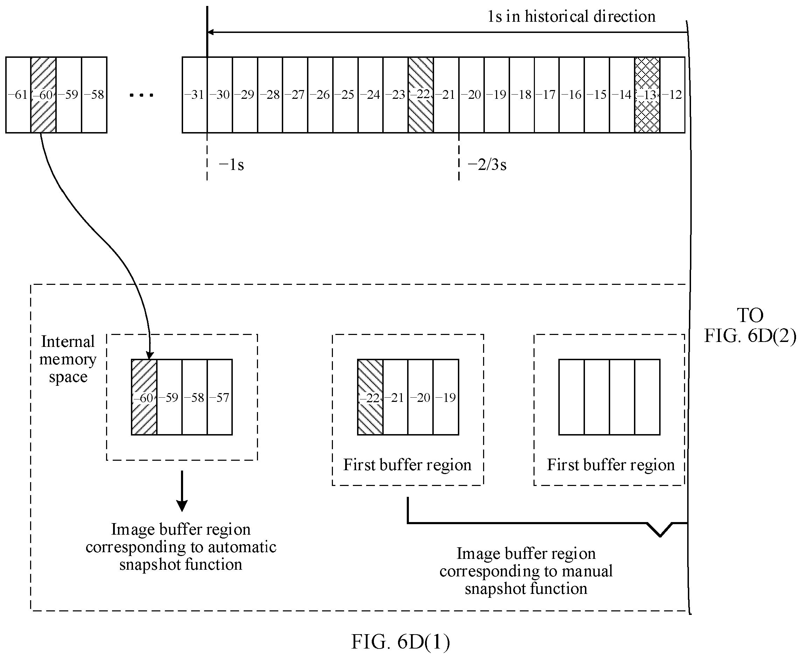

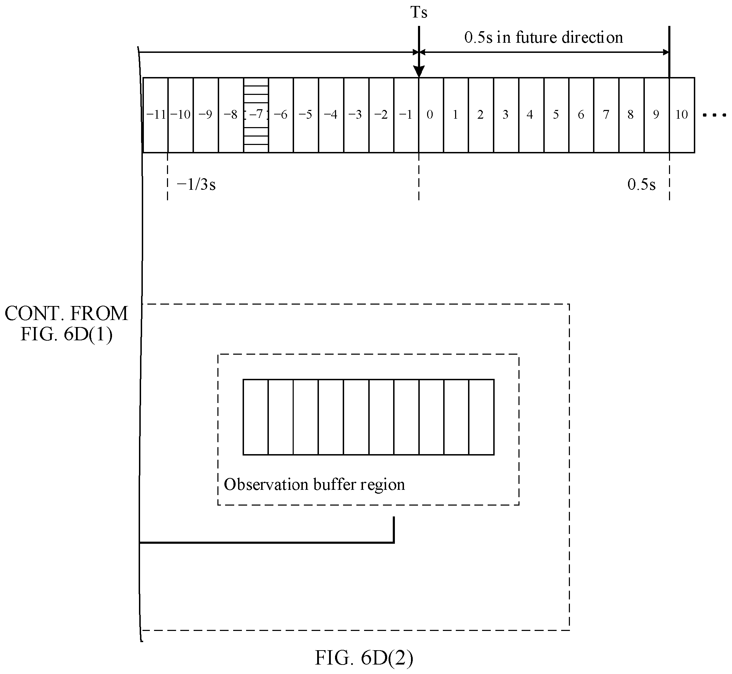

As shown in FIG. 6D(1) and FIG. 6D(2), when the mobile phone detects a photographing operation, the uncertainty of manual snapshot disappears. In this case, the mobile phone may keep a candidate image with a highest score in all the first buffer regions and the observation buffer region, and release the remaining candidate images other than the candidate image with the highest score in the image buffer regions corresponding to the manual snapshot function. The score of the candidate image may be a score of a preview image with a highest score in the n frames of preview images included in the candidate image. For example, assuming that at the occurrence moment of the photographing operation, a score of a preview image numbered -22 in preview images numbered -22 to -19 buffered in one first buffer region is 95, a score of a preview image numbered -13 in preview images numbered -13 to -10 buffered in the other first buffer region is 92, and a score of a preview image numbered -7 in preview images numbered -7 to -4 fixed in the observation buffer region is 85, the mobile phone may keep the preview images numbered -13 to -10 and release the preview images numbered -13 to -10 and the preview images numbered -7 to -4.

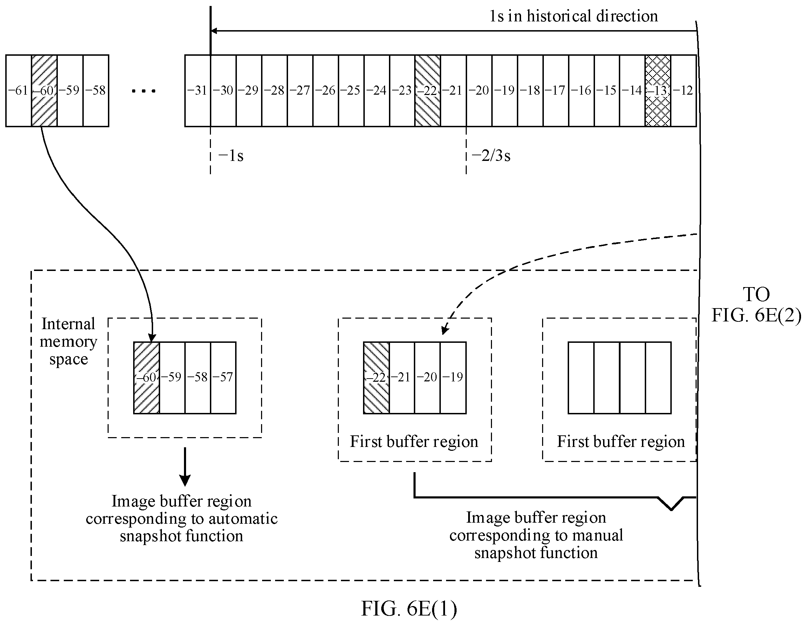

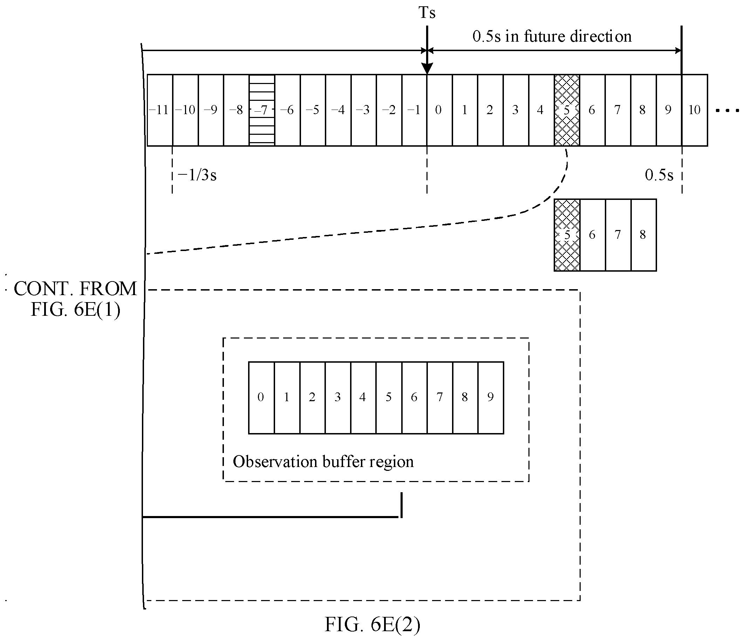

As shown in FIG. 6E(1) and FIG. 6E(2), after the mobile phone detects the photographing operation, as time goes by, preview images in a future direction of the occurrence moment Ts of the photographing operation fall within the observation time window. In this case, the mobile phone may compare scores of frames of preview images within the second duration in the future direction of the occurrence moment Ts of the photographing operation with the score of the candidate image currently kept in the first buffer region. If there is a preview image whose score is higher than the score of the kept candidate image within the second duration in the future direction of the occurrence moment Ts of the photographing operation, the mobile phone may replace the candidate image currently kept in the first buffer region with the preview image with a higher score within the second duration in the future direction of the occurrence moment Ts of the photographing operation. For example, assuming that a score of a preview image numbered 5 in the future direction of the occurrence moment Ts of the photographing operation is higher than the score of the preview image numbered -22 currently kept in the first buffer region, the mobile phone may replace the preview images numbered -22 to -19 currently kept in the first buffer region with preview images numbered 5 to 8.

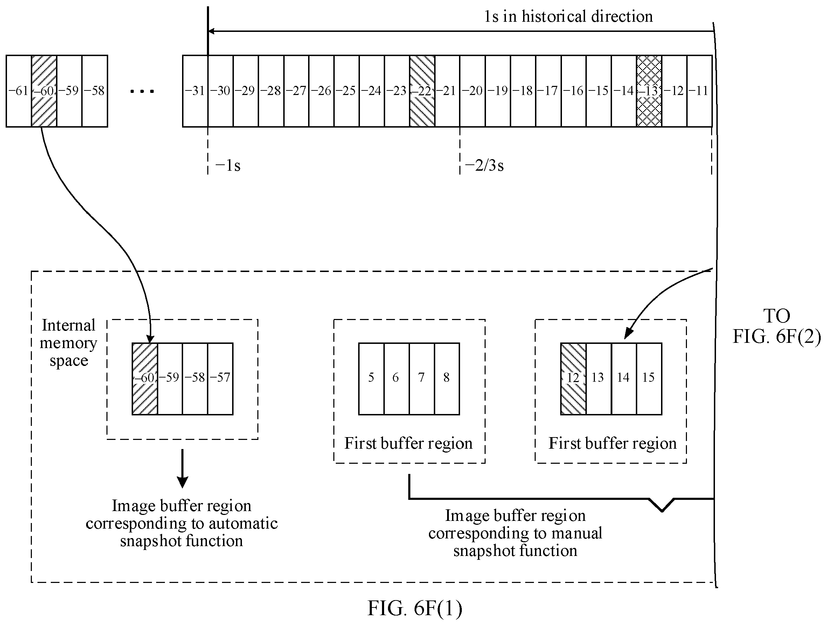

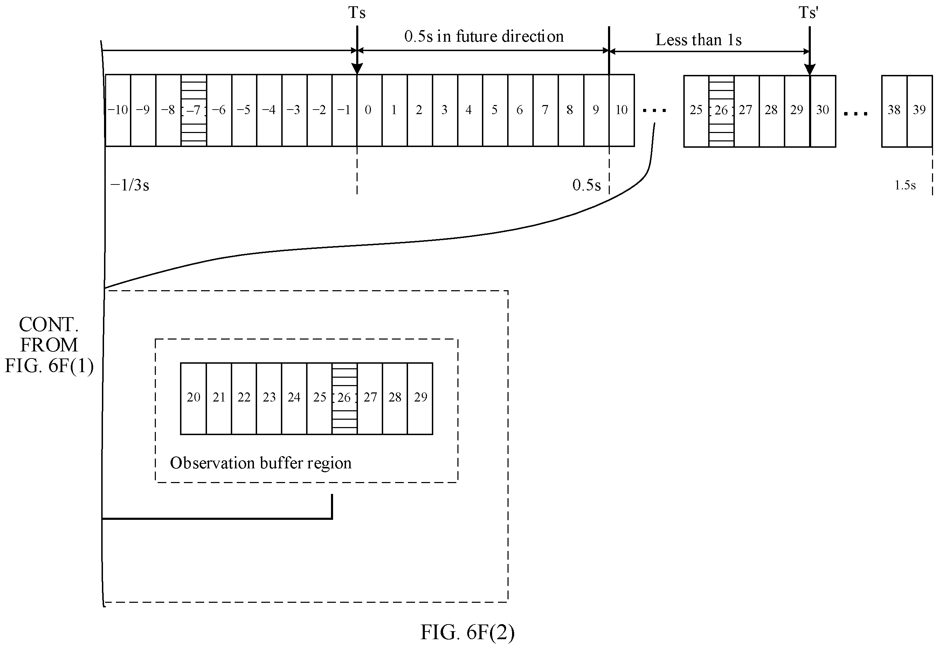

As shown in FIG. 6F(1) and FIG. 6F(2), if the mobile phone detects another photographing operation again after the occurrence moment Ts of the photographing operation, and a time interval between an occurrence moment Ts' of the another photographing operation and the occurrence moment Ts of the photographing operation is less than a sum of the first duration and the second duration, a frame selection range of the another photographing operation in the historical direction cannot completely cover all the preview images within the first duration. In this case, to avoid repetition of frame selection ranges of the two adjacent photographing operations, the mobile phone may select a candidate image with a highest score from candidate images that have been buffered in the first buffer regions and the observation buffer region and that are between the occurrence moment Ts of the photographing operation and the occurrence moment Ts' of the another photographing operation as a to-be-compared image corresponding to another photographing operation.

For example, assuming that the candidate images that have been buffered in the first buffer regions and the observation buffer region when the another photographing operation occurs and that are between the occurrence moment Ts of the photographing operation and the occurrence moment Ts' of the another photographing operation include preview images numbered 12 to 15 and preview images numbered 26 to 29, and a score of the preview image numbered 12 is higher than a score of the preview image numbered 26, the mobile phone may determine the preview images numbered 12 to 15 as the to-be-compared image corresponding to the another photographing operation.

As time progresses toward the future direction of the occurrence moment Ts' of the another photographing operation, the mobile phone may respectively compare a score of each frame of preview image within the second duration in the future direction of the occurrence moment Ts' of the another photographing operation with the score of the to-be-compared image corresponding to the another photographing operation, and use an image with a highest score in the to-be-compared image corresponding to the another photographing operation and all preview images within the second duration in the future direction of the occurrence moment Ts' of the another photographing operation as a snapshot image corresponding to the another photographing operation.

In an extreme case of the scene shown in FIG. 6F(1) and FIG. 6F(2), as shown in FIG. 6G(1) and FIG. 6G(2), if the time interval between the occurrence moment Ts' of the another photographing operation and the occurrence moment Ts of the photographing operation is less than the second duration, the mobile phone compares only scores of the frames of preview images between the occurrence moment Ts of the photographing operation and the occurrence moment Ts' of the another photographing operation with the score of the to-be-compared image corresponding to the photographing operation, to determine an image with a highest score in the frames of preview images between the occurrence moment Ts of the photographing operation and the occurrence moment Ts' of the another photographing operation and the to-be-compared image corresponding to the photographing operation as the manual snapshot image corresponding to the occurrence moment Ts of the photographing operation.

It may be understood that, as shown in FIG. 5E, each time after the user enters a photographing operation in the photographing preview interface 52, the mobile phone generates a photographing thumbnail, and displays the photographing thumbnail in a thumbnail display region 526 of the photographing preview interface 52. After the mobile phone displays the photographing thumbnail of this photographing operation in the thumbnail display region 526, the user is allowed to enter the photographing operation again. Based on the photographing logic of the camera application in the snapshot mode provided in embodiments of this application, after the user enters the photographing operation, the mobile phone further needs to observe the preview images appearing within the second duration in the future direction of the occurrence moment of the photographing operation. Therefore, in an optional implementation, after the user enters the photographing operation, in order not to affect a speed at which the user continuously performs snapshot, the mobile phone may further, when detecting the photographing operation, generate a target thumbnail based on a determined to-be-compared image corresponding to the photographing operation, and display the target thumbnail in a thumbnail display region of a photographing preview interface.

Based on this, after the second duration from the occurrence moment of the photographing operation, the mobile phone may generate an actual thumbnail based on a finally determined snapshot image corresponding to the photographing operation, and replace the target thumbnail with the actual thumbnail.

A specific process of the photographing method provided in embodiments of this application is described below with reference to the foregoing embodiments. The photographing method provided in embodiments of this application may be applied to a static photographing scene (for example, a night scene, a street scene, or a landscape), or may be applied to a dynamic photographing scene (for example, a sports scene, a water splashing scene, an object throwing scene, a human-pet interaction scene, or a fleeting scene). The photographing scene to which the photographing method is applied is not specifically limited in embodiments of this application.

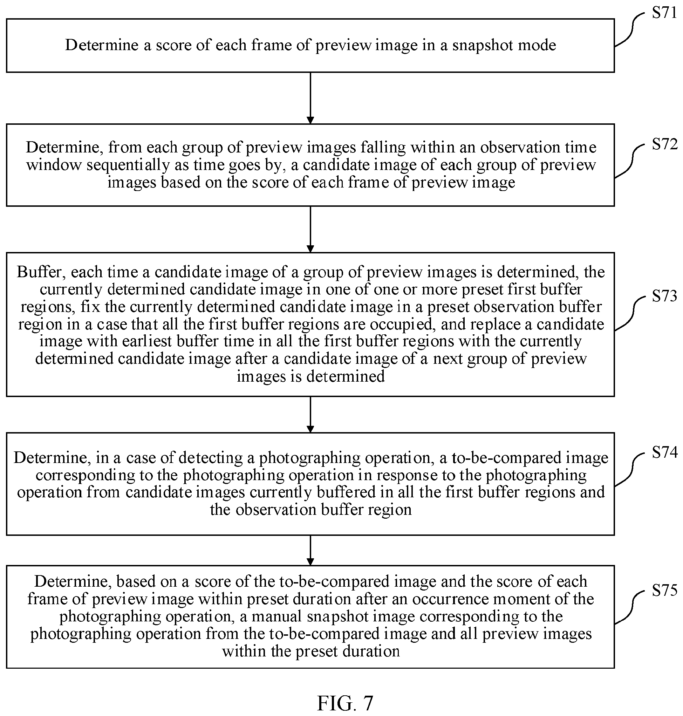

FIG. 7 is a schematic flowchart of a photographing method according to an embodiment of this application. As shown in FIG. 7, the photographing method may include S71 to S75, and details are as follows:
S71. Determine a score of each frame of preview image in a snapshot mode.
   For a method of determining the score of each frame of preview image, reference may be made to related descriptions in the foregoing embodiments, and details are not described herein again.
S72. Determine, from each group of preview images falling within an observation time window sequentially as time goes by, a candidate image of each group of preview images based on the score of each frame of preview image.

In an optional implementation, the electronic device may determine a preview image whose score is higher than a preset score threshold in each group of preview images as the candidate image of each group of preview images.

For content of the preset score threshold, reference may be made to related descriptions in the foregoing embodiments, and details are not described herein again.

S73. Buffer, each time a candidate image of a group of preview images is determined, the currently determined candidate image in one of one or more preset first buffer regions, fix the currently determined candidate image in a preset observation buffer region in a case that all the first buffer regions are occupied, and replace a candidate image with earliest buffer time in all the first buffer regions with the currently determined candidate image after a candidate image of a next group of preview images is determined.

It should be noted that for a specific implementation process of S73, reference may be made to related descriptions in the embodiment corresponding to FIG. 6A(1) and FIG. 6A(2), and details are not described herein again.

S74. Determine, in a case of detecting a photographing operation, a to-be-compared image corresponding to the photographing operation in response to the photographing operation from candidate images currently buffered in all the first buffer regions and the observation buffer region.

The candidate images currently buffered in all the first buffer regions and the observation buffer region refer to candidate images that have been buffered in all the first buffer regions and the observation buffer region at the occurrence moment of the photographing operation.

In an optional implementation, the electronic device may determine a candidate image with a highest score in the candidate images buffered in all the first buffer regions and the observation buffer region at the occurrence moment of the photographing operation as the to-be-compared image.

S75. Determine, based on a score of the to-be-compared image and the score of each frame of preview image within preset duration after an occurrence moment of the photographing operation, a manual snapshot image corresponding to the photographing operation from the to-be-compared image and all preview images within the preset duration.

The preset duration may be the second duration in the foregoing embodiments.

In an optional implementation, if the electronic device does not detect another photographing operation again within the preset duration after the occurrence moment of the photographing operation, the electronic device may determine an image with a highest score in the to-be-compared image and all the preview images within the preset duration as the manual snapshot image corresponding to the photographing operation. It should be noted that for a specific implementation process of this implementation, reference may be made to related descriptions in the embodiment corresponding to FIG. 6A(1) and FIG. 6A(2), and details are not described herein again.

In another optional implementation, if the electronic device detects another photographing operation again within the preset duration after the occurrence moment of the photographing operation, the electronic device may determine an image with a highest score in the to-be-compared image and all preview images within a first time period as the manual snapshot image corresponding to the photographing operation. A start moment of the first time period is the occurrence moment of the photographing operation, and an end moment of the first time period may be a moment at which the another photographing operation is detected again (that is, an occurrence moment of the another photographing operation). It should be noted that for a specific implementation process of this implementation, reference may be made to related descriptions in the embodiment corresponding to FIG. 6G(1) and FIG. 6G(2), and details are not described herein again.

In still another optional implementation, if the electronic device detects another photographing operation again within the preset duration after the occurrence moment of the photographing operation, the electronic device may alternatively determine a to-be-compared image corresponding to the another photographing operation based on the scores of all preview images within a second time period. A start moment of the second time period is the moment at which the electronic device detects the another photographing operation again within the preset duration, and a sum of duration of the second time period and duration of the first time period is second duration. It should be noted that for a specific implementation process of this implementation, reference may also be made to related descriptions in the embodiment corresponding to FIG. 6G(1) and FIG. 6G(2), and details are not described herein again.

In some other embodiments of this application, the electronic device may generate, after determining the to-be-compared image corresponding to the photographing operation, a target thumbnail based on the to-be-compared image corresponding to the photographing operation, and display the target thumbnail in a thumbnail display region of a photographing preview interface. In this way, influence on a manual snapshot speed of the user can be avoided, to improve the photographing experience of the user.

In still some other embodiments of this application, the electronic device may further generate, after determining the manual snapshot image corresponding to the photographing operation, an actual thumbnail based on the manual snapshot image corresponding to the photographing operation, and replace the target thumbnail with the actual thumbnail. The target thumbnail generated at the occurrence moment of the photographing operation is replaced with the actual thumbnail corresponding to the manual snapshot image, so that the thumbnail display region can correctly display the thumbnail corresponding to the final manual snapshot image. In this way, the manual snapshot speed of the user is not affected, and the thumbnail corresponding to the final manual snapshot image can be correctly displayed.

Based on the same technical concept, an embodiment of this application further provides an electronic device. The electronic device may include: a display; one or more processors; and one or more memories, where the one or more memories store one or more computer programs, the one or more computer programs include instructions, and when the instructions are executed by the one or more processors, the electronic device is caused to perform one or more steps in any process shown in FIG. 7.

Based on the same technical concept, an embodiment of this application further provides a computer-readable storage medium. The computer-readable storage medium stores a computer-executable program, and when the computer-executable program is invoked by a computer, the computer is caused to perform one or more steps in any process shown in FIG. 7.

Based on the same technical concept, an embodiment of this application further provides a chip system, including a processor, where the processor is coupled to a memory, and the processor executes a computer-executable program stored in the memory to implement one or more steps in any process shown in FIG. 7. The chip system may be a single chip or may be a chip module including a plurality of chips.

Based on the same technical concept, an embodiment of this application further provides a computer-executable program product. When the computer-executable program product is run on an electronic device, the electronic device is caused to perform one or more steps in any process shown in FIG. 7.

In the foregoing embodiments, the descriptions of the embodiments have respective focuses. For a part that is not described in detail or recorded in an embodiment, reference may be made to related descriptions in other embodiments. It should be understood that sequence numbers of the foregoing steps do not indicate an execution sequence. An execution sequence of processes shall be determined based on functions and internal logic of the processes, and should not constitute any limitation on an implementation process of embodiments of this application.

All or some of the foregoing embodiments may be implemented by using software, hardware, firmware, or any combination thereof. When the software is used for implementation, all or some of the embodiments may be performed in the form of a computer program product. The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, by using a coaxial cable, an optical fiber, or a digital subscriber line) or wireless (for example, infrared, radio, or microwave) manner. The computer-readable storage medium may be any usable medium that can be accessed by the computer, or a data storage device, such as a server or a data center in which one or more usable media are integrated. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes in the method in the embodiments may be implemented by using a computer program instructing relevant hardware. The program may be stored in a computer-readable storage medium. When the program is executed, the processes in the foregoing method embodiments may be performed. The foregoing storage medium includes: any medium that can store program code, such as a ROM, a random access memory RAM, a magnetic disk, or an optical disc.

The foregoing descriptions are merely specific implementations of embodiments of this application, but the invention is not limited thereto. The scope of protection of the invention is defined by the appended claims.

## Claims

1. A photographing method, comprising:
determining a score of each preview image in a snapshot mode, the score being indicative of the degree to which the preview image matches a highlight image;
determining, from each group of preview images falling within an observation time window sequentially as time goes by, a candidate image of each group of preview images based on the score of each preview image, by determining a preview image whose score is higher than a preset score threshold in each group of preview images , or whose score is a highest score in the group of preview images , as the candidate image of each group of preview images;
buffering, each time a candidate image of a group of preview images is determined, the currently determined candidate image in one of one or more preset first buffer regions,
**characterized in that** the method further comprises:
fixing the currently determined candidate image in a preset observation buffer region in a case that all the first buffer regions are occupied, and replacing a candidate image with earliest buffer time in all the first buffer regions with the currently determined candidate image after a candidate image of a next group of preview images is determined;
determining, in a case of detecting a photographing operation, a to-be-compared image of the photographing operation in response to the photographing operation from candidate images currently buffered in all the first buffer regions and the observation buffer region; and
determining, based on a score of the to-be-compared image and the score of each preview image within preset duration after an occurrence moment of the photographing operation, a manual snapshot image corresponding to the photographing operation from the to-be-compared image and all preview images within the preset duration.

2. The photographing method according to claim 1, wherein the determining, based on a score of the to-be-compared image and the score of each preview image within preset duration after an occurrence moment of the photographing operation, a manual snapshot image corresponding to the photographing operation from the to-be-compared image and all preview images within the preset duration comprises:
determining, in a case that no another photographing operation is detected again within the preset duration, an image with a highest score in the to-be-compared image and all the preview images within the preset duration as the manual snapshot image corresponding to the photographing operation.

3. The photographing method according to claim 2, wherein the determining, based on a score of the to-be-compared image and the score of each preview image within preset duration after an occurrence moment of the photographing operation, a manual snapshot image corresponding to the photographing operation from the to-be-compared image and all preview images within the preset duration further comprises:
determining, in a case that another photographing operation is detected again within the preset duration, an image with a highest score in the to-be-compared image and all preview images within a first time period as the manual snapshot image corresponding to the photographing operation, wherein
a start moment of the first time period is the occurrence moment of the photographing operation, and an end moment of the first time period is a moment at which the another photographing operation is detected again.

4. The photographing method according to claim 3, further comprising:
determining, in a case that the another photographing operation is detected again within the preset duration, a to-be-compared image corresponding to the another photographing operation based on the scores of all preview images within a second time period, wherein
a start moment of the second time period is the moment at which the another photographing operation is detected again, and a sum of duration of the second time period and duration of the first time period is second duration.

5. The photographing method according to any one of claims 1 to 4, wherein after the determining a to-be-compared image of the photographing operation from candidate images currently buffered in all the first buffer regions and the observation buffer region, and before the determining a manual snapshot image corresponding to the photographing operation from the to-be-compared image and all preview images within the preset duration, the method further comprises:
generating a target thumbnail based on the to-be-compared image corresponding to the photographing operation, and displaying the target thumbnail in a thumbnail display region of a photographing preview interface.

6. The photographing method according to claim 5, wherein after the determining a manual snapshot image corresponding to the photographing operation from the to-be-compared image and all preview images within the preset duration, the method further comprises:
generating an actual thumbnail based on the manual snapshot image corresponding to the photographing operation, and replacing the target thumbnail with the actual thumbnail.

7. An electronic device (100), comprising:
a camera (193) configured to capture preview images;
a display (194) configured to display a thumbnail;
one or more processors (110); and
one or more memories (121), wherein
the one or more memories store one or more computer-executable programs, the one or more computer-executable programs comprise instructions, and when the instructions are executed by the one or more processors, the electronic device (100) is caused to perform the steps of the photographing method according to any one of claims 1 to 6.

8. A computer-readable storage medium comprising instructions which, when executed by a computer, cause the computer to perform the steps of the photographing method according to any one of claims 1 to 6.

## Patentansprüche

1. Aufnahmeverfahren, umfassend:
Bestimmen eines Scores für jedes Vorschaubild in einem Schnappschussmodus, wobei der Score den Grad angibt, zu dem das Vorschaubild mit einem Highlight-Bild übereinstimmt;
Bestimmen eines Kandidatenbildes für jede Gruppe von Vorschaubildern aus jeder Gruppe von Vorschaubildern, die im Zeitverlauf nacheinander in ein Beobachtungszeitfenster fallen, basierend auf dem Score jedes Vorschaubildes, durch Bestimmen eines Vorschaubildes in jeder Gruppe von Vorschaubildern, dessen Score höher als ein voreingestellter Score-Schwellenwert ist oder dessen Score der höchste Score in der Gruppe von Vorschaubildern ist, als das Kandidatenbild für jede Gruppe von Vorschaubildern;
Puffern des aktuell bestimmten Kandidatenbildes in einem von einem oder mehreren voreingestellten ersten Pufferbereichen jedes Mal, wenn ein Kandidatenbild einer Gruppe von Vorschaubildern bestimmt wird, **dadurch gekennzeichnet, dass** das Verfahren ferner umfasst: Fixieren des aktuell bestimmten Kandidatenbildes in einem voreingestellten Beobachtungspufferbereich für den Fall, dass alle ersten Pufferbereiche belegt sind, und Ersetzen eines Kandidatenbildes mit der frühesten Pufferzeit in allen ersten Pufferbereichen durch das aktuell bestimmte Kandidatenbild, nachdem ein Kandidatenbild einer nächsten Gruppe von Vorschaubildern bestimmt wurde;
Bestimmen, für den Fall, dass ein Aufnahmevorgang erkannt wird, eines zu vergleichenden Bildes des Aufnahmevorgangs als Reaktion auf den Aufnahmevorgang aus den Kandidatenbildern, die aktuell in allen ersten Pufferbereichen und dem Beobachtungspufferbereich gepuffert sind; und
Bestimmen, basierend auf einem Score des zu vergleichenden Bildes und dem Score jedes Vorschaubildes innerhalb einer voreingestellten Dauer nach einem Auftretensmoment des Aufnahmevorgangs, eines manuellen Schnappschussbildes, das dem Aufnahmevorgang entspricht, aus dem zu vergleichenden Bild und allen Vorschaubildern innerhalb der voreingestellten Dauer.

2. Aufnahmeverfahren nach Anspruch 1, wobei das Bestimmen eines manuellen Schnappschussbildes, das dem Aufnahmevorgang entspricht, aus dem zu vergleichenden Bild und allen Vorschaubildern innerhalb der voreingestellten Dauer basierend auf einem Score des zu vergleichenden Bildes und dem Score jedes Vorschaubildes innerhalb einer voreingestellten Dauer nach einem Auftretensmoment des Aufnahmevorgangs umfasst:
Bestimmen eines Bildes mit einem höchsten Score aus dem zu vergleichenden Bild und allen Vorschaubildern innerhalb der voreingestellten Dauer als das manuelle Schnappschussbild, das dem Aufnahmevorgang entspricht, für den Fall, dass innerhalb der voreingestellten Dauer kein weiterer Aufnahmevorgang erneut erkannt wird.

3. Das Fotografierverfahren nach Anspruch 2, wobei das Bestimmen, basierend auf einem Score des zu vergleichenden Bildes und dem Score jedes Vorschaubildes innerhalb einer voreingestellten Dauer nach einem Auftrittsmoment des Fotografier-Vorgangs, eines manuellen Schnappschussbildes, das dem Fotografier-Vorgang entspricht, aus dem zu vergleichenden Bild und allen Vorschaubildern innerhalb der voreingestellten Dauer ferner umfasst:
Bestimmen, in einem Fall, in dem ein weiterer Fotografier-Vorgang innerhalb der voreingestellten Dauer erneut erkannt wird, eines Bildes mit einem höchsten Score unter dem zu vergleichenden Bild und allen Vorschaubildern innerhalb eines ersten Zeitraums als das manuelle Schnappschussbild, das dem Fotografier-Vorgang entspricht, wobei
ein Startzeitpunkt des ersten Zeitraums der Auftrittsmoment des Fotografier-Vorgangs ist und ein Endzeitpunkt des ersten Zeitraums ein Moment ist, zu dem der weitere Fotografier-Vorgang erneut erkannt wird.

4. Das Fotografierverfahren nach Anspruch 3, ferner umfassend:
Bestimmen, in einem Fall, in dem der weitere Fotografier-Vorgang innerhalb der voreingestellten Dauer erneut erkannt wird, eines zu vergleichenden Bildes, das dem weiteren Fotografier-Vorgang entspricht, basierend auf den Scores aller Vorschaubilder innerhalb eines zweiten Zeitraums, wobei
ein Startzeitpunkt des zweiten Zeitraums der Moment ist, zu dem der weitere Fotografier-Vorgang erneut erkannt wird, und eine Summe der Dauer des zweiten Zeitraums und der Dauer des ersten Zeitraums eine zweite Dauer ist.

5. Das Fotografierverfahren nach einem der Ansprüche 1 bis 4, wobei nach dem Bestimmen eines zu vergleichenden Bildes des Fotografier-Vorgangs aus Kandidatenbildern, die aktuell in allen ersten Pufferbereichen und dem Beobachtungspufferbereich gepuffert sind, und vor dem Bestimmen eines manuellen Schnappschussbildes, das dem Fotografier-Vorgang entspricht, aus dem zu vergleichenden Bild und allen Vorschaubildern innerhalb der voreingestellten Dauer, das Verfahren ferner umfasst:
Erzeugen eines Ziel-Miniaturbildes basierend auf dem zu vergleichenden Bild, das dem Fotografier-Vorgang entspricht, und Anzeigen des Ziel-Miniaturbildes in einem Miniaturbild-Anzeigebereich einer Fotografier- Vorschauoberfläche.

6. Das Fotografierverfahren nach Anspruch 5, wobei nach dem Bestimmen eines manuellen Schnappschussbildes, das dem Fotografier-Vorgang entspricht, aus dem zu vergleichenden Bild und allen Vorschaubildern innerhalb der voreingestellten Dauer, das Verfahren ferner umfasst:
Erzeugen eines tatsächlichen Miniaturbildes basierend auf dem manuellen Schnappschussbild, das dem Fotografier-Vorgang entspricht, und Ersetzen des Ziel-Miniaturbildes durch das tatsächliche Miniaturbild.

7. Eine elektronische Vorrichtung (100), umfassend:
eine Kamera (193), die dazu konfiguriert ist, Vorschaubilder aufzunehmen;
eine Anzeige (194), die dazu konfiguriert ist, ein Vorschaubild anzuzeigen;
ein oder mehrere Prozessoren (110); und
ein oder mehrere Speicher (121), wobei
die einen oder mehreren Speicher ein oder mehrere computerausführbare Programme speichern, wobei die einen oder mehreren computerausführbaren Programme Anweisungen umfassen, und wenn die Anweisungen von den einen oder mehreren Prozessoren ausgeführt werden, die elektronische Vorrichtung (100) dazu veranlasst wird, die Schritte des Fotografierverfahrens nach einem der Ansprüche 1 bis 6 durchzuführen.

8. Computerlesbares Speichermedium, das Anweisungen umfasst, die, wenn sie von einem Computer ausgeführt werden, den Computer dazu veranlassen, die Schritte des Fotografierverfahrens nach einem der Ansprüche 1 bis 6 durchzuführen.

## Revendications

1. Procédé de photographie, comprenant :
la détermination d'un score de chaque image de prévisualisation dans un mode de capture, le score étant indicatif du degré selon lequel l'image de prévisualisation correspond à une image phare ;
la détermination, à partir de chaque groupe d'images de prévisualisation tombant dans une fenêtre temporelle d'observation séquentiellement au fil du temps, d'une image candidate de chaque groupe d'images de prévisualisation sur la base du score de chaque image de prévisualisation, en déterminant une image de prévisualisation dont le score est supérieur à un seuil de score prédéfini dans chaque groupe d'images de prévisualisation, ou dont le score est un score le plus élevé dans le groupe d'images de prévisualisation, en tant qu'image candidate de chaque groupe d'images de prévisualisation ;
la mise en mémoire tampon, chaque fois qu'une image candidate d'un groupe d'images de prévisualisation est déterminée, de l'image candidate actuellement déterminée dans l'une d'une ou plusieurs premières zones de mémoire tampon prédéfinies, **caractérisé en ce que** le procédé comprend en outre : la fixation de l'image candidate actuellement déterminée dans une zone de mémoire tampon d'observation prédéfinie dans le cas où toutes les premières zones de mémoire tampon sont occupées, et le remplacement d'une image candidate ayant le temps de mise en mémoire tampon le plus ancien dans toutes les premières zones de mémoire tampon par l'image candidate actuellement déterminée après la détermination d'une image candidate d'un groupe suivant d'images de prévisualisation ;
la détermination, dans le cas de la détection d'une opération de photographie, d'une image à comparer de l'opération de photographie en réponse à l'opération de photographie à partir d'images candidates actuellement mises en mémoire tampon dans toutes les premières zones de mémoire tampon et la zone de mémoire tampon d'observation ; et
la détermination, sur la base d'un score de l'image à comparer et du score de chaque image de prévisualisation au cours d'une durée prédéfinie après un moment d'occurrence de l'opération de photographie, d'une image de capture manuelle correspondant à l'opération de photographie à partir de l'image à comparer et de toutes les images de prévisualisation au cours de la durée prédéfinie.

2. Procédé de photographie selon la revendication 1, dans lequel la détermination, sur la base d'un score de l'image à comparer et du score de chaque image de prévisualisation au cours d'une durée prédéfinie après un moment d'occurrence de l'opération de photographie, d'une image de capture manuelle correspondant à l'opération de photographie à partir de l'image à comparer et de toutes les images de prévisualisation au cours de la durée prédéfinie comprend :
la détermination, dans le cas où aucune autre opération de photographie n'est détectée à nouveau au cours de la durée prédéfinie, d'une image ayant le score le plus élevé parmi l'image à comparer et toutes les images de prévisualisation au cours de la durée prédéfinie en tant qu'image de capture manuelle correspondant à l'opération de photographie.

3. Procédé de photographie selon la revendication 2, dans lequel la détermination, basée sur un score de l'image à comparer et sur le score de chaque image de prévisualisation dans une durée prédéfinie après un moment d'occurrence de l'opération de photographie, d'une image instantanée manuelle correspondant à l'opération de photographie à partir de l'image à comparer et de toutes les images de prévisualisation dans la durée prédéfinie comprend en outre :
la détermination, dans le cas où une autre opération de photographie est détectée à nouveau dans la durée prédéfinie, d'une image ayant un score le plus élevé parmi l'image à comparer et toutes les images de prévisualisation dans une première période de temps comme étant l'image instantanée manuelle correspondant à l'opération de photographie, dans lequel
un moment de début de la première période de temps est le moment d'occurrence de l'opération de photographie, et un moment de fin de la première période de temps est un moment auquel l'autre opération de photographie est détectée à nouveau.

4. Procédé de photographie selon la revendication 3, comprenant en outre :
la détermination, dans le cas où l'autre opération de photographie est détectée à nouveau dans la durée prédéfinie, d'une image à comparer correspondant à l'autre opération de photographie basée sur les scores de toutes les images de prévisualisation dans une deuxième période de temps, dans lequel
un moment de début de la deuxième période de temps est le moment auquel l'autre opération de photographie est détectée à nouveau, et une somme de la durée de la deuxième période de temps et de la durée de la première période de temps est une deuxième durée.

5. Procédé de photographie selon l'une quelconque des revendications 1 à 4, dans lequel, après la détermination d'une image à comparer de l'opération de photographie parmi des images candidates actuellement mises en mémoire tampon dans toutes les premières zones de mémoire tampon et la zone de mémoire tampon d'observation, et avant la détermination d'une image instantanée manuelle correspondant à l'opération de photographie à partir de l'image à comparer et de toutes les images de prévisualisation dans la durée prédéfinie, le procédé comprend en outre :
la génération d'une vignette cible basée sur l'image à comparer correspondant à l'opération de photographie, et l'affichage de la vignette cible dans une zone d'affichage de vignette d'une interface de prévisualisation de photographie.

6. Procédé de photographie selon la revendication 5, dans lequel, après la détermination d'une image instantanée manuelle correspondant à l'opération de photographie à partir de l'image à comparer et de toutes les images de prévisualisation dans la durée prédéfinie, le procédé comprend en outre :
la génération d'une vignette réelle basée sur l'image instantanée manuelle correspondant à l'opération de photographie, et le remplacement de la vignette cible par la vignette réelle.

7. Dispositif électronique (100), comprenant :
une caméra (193) configurée pour capturer des images de prévisualisation ;
un affichage (194) configuré pour afficher une vignette ;
un ou plusieurs processeurs (110) ; et
une ou plusieurs mémoires (121), dans lequel
les une ou plusieurs mémoires stockent un ou plusieurs programmes exécutables par ordinateur, les un ou plusieurs programmes exécutables par ordinateur comprennent des instructions, et lorsque les instructions sont exécutées par les un ou plusieurs processeurs, le dispositif électronique (100) est amené à effectuer les étapes du procédé de photographie selon l'une quelconque des revendications 1 à 6.

8. Un support de stockage lisible par ordinateur comprenant des instructions qui, lorsqu'elles sont exécutées par un ordinateur, amènent l'ordinateur à effectuer les étapes du procédé de photographie selon l'une quelconque des revendications 1 à 6.
